(19) Europäisches Patentamt / European Patent Office / Office européen des brevets

(11) EP 2 208 211 B1

(12) **EUROPÄISCHE PATENTSCHRIFT**

(45) Veröffentlichungstag und Bekanntmachung des Hinweises auf die Patenterteilung:
**16.03.2016 Patentblatt 2016/11**

(21) Anmeldenummer: **08803621.5**

(22) Anmeldetag: **04.09.2008**

(51) Int Cl.:
***H01G 11/48*** (2013.01) ***H01G 9/15*** (2006.01)
***H01G 9/025*** (2006.01) ***H01G 11/56*** (2013.01)

(86) Internationale Anmeldenummer:
**PCT/EP2008/061650**

(87) Internationale Veröffentlichungsnummer:
**WO 2009/047059 (16.04.2009 Gazette 2009/16)**

(54) **VERFAHREN ZUR HERSTELLUNG VON ELEKTROLYTKONDENSATOREN MIT POLYMERER ZWISCHENSCHICHT**

METHOD FOR THE PRODUCTION OF ELECTROLYTE CAPACITORS WITH POLYMER INTERMEDIATE LAYER

PROCÉDÉ DE FABRICATION DE CONDENSATEURS ÉLECTROLYTIQUES À COUCHE INTERMÉDIAIRE POLYMÈRE

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **08.10.2007 DE 102007048212**

(43) Veröffentlichungstag der Anmeldung:
**21.07.2010 Patentblatt 2010/29**

(73) Patentinhaber: **Heraeus Deutschland GmbH & Co. KG**
**63450 Hanau (DE)**

(72) Erfinder:
- **MERKER, Udo**
  **51105 Köln (DE)**
- **WUSSOW, Klaus**
  **57250 Netphen (DE)**

(74) Vertreter: **Herzog, Fiesser & Partner Patentanwälte PartG mbB**
**Immermannstrasse 40**
**40210 Düsseldorf (DE)**

(56) Entgegenhaltungen:
**EP-A- 0 440 957** **EP-A- 1 096 519**
**EP-A- 1 713 103** **JP-A- 2003 229 330**

EP 2 208 211 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

Die Erfindung betrifft ein Verfahren zur Herstellung von Elektrolytkondensatoren mit niedrigem äquivalenten Serienwiderstand und niedrigem Reststrom, die aus einem Feststoffelektrolyten, einer Zwischenschicht und einer äußeren Schicht enthaltend leitfähige Polymere bestehen, nach diesem Verfahren hergestellte Elektrolytkondensatoren sowie die Verwendung solcher Elektrolytkondensatoren.

Ein handelsüblicher Feststoffelektrolytkondensator besteht in der Regel aus einer porösen Metallelektrode, einer auf der Metalloberfläche befindlichen Oxidschicht, einem elektrisch leitfähigen Feststoff, der in die poröse Struktur eingebracht wird, einer äußeren Elektrode (Kontaktierung), wie z.B. einer Silberschicht oder einer Kathodenfolie, sowie weiteren elektrischen Kontakten und einer Verkapselung.

Beispiele für Feststoffelektrolytkondensatoren sind Tantal-, Aluminium, Niob- und Nioboxidkondensatoren mit Ladungstransferkomplexen, Braunstein- oder Polymer-Feststoff-elektrolyten. Die Verwendung poröser Körper hat den Vorteil, dass sich aufgrund der großen Oberfläche eine sehr hohe Kapazitätsdichte, d.h. eine hohe elektrische Kapazität auf kleinem Raum, erzielen lässt.

Besonders geeignet als Feststoffelektrolyte sind aufgrund ihrer hohen elektrischen Leitfähigkeit $\pi$-konjugierte Polymere. $\pi$-konjugierte Polymere werden auch als leitfähige Polymere oder als synthetische Metalle bezeichnet. Sie gewinnen zunehmend an wirtschaftlicher Bedeutung, da Polymere gegenüber Metallen Vorteile bezüglich der Verarbeitbarkeit, des Gewichts und der gezielten Einstellung von Eigenschaften durch chemische Modifikation haben. Beispiele für bekannte $\pi$-konjugierte Polymere sind Polypyrrole, Polythiophene, Polyaniline, Polyacetylene, Polyphenylene und Poly(p-phenylen-vinylene), wobei ein besonders wichtiges und technisch genutztes Polythiophen das Poly-3,4-(ethylen-1,2-dioxy)thiophen, oft auch als Poly(3,4-ethylendioxythiophen) bezeichnet, ist, da es in seiner oxidierten Form eine sehr hohe Leitfähigkeit und eine hohe thermische Stabilität besitzt.

Die technische Entwicklung in der Elektronik erfordert zunehmend Feststoffelektrolytkondensatoren mit sehr niedrigen Äquivalenten Serienwiderständen (ESR). Grund dafür sind beispielsweise fallende Logikspannungen, eine höhere Integrationsdichte und steigende Taktfrequenzen in integrierten Schaltkreisen. Ferner senkt ein niedriger ESR auch den Energieverbrauch, was besonders für mobile, batteriebetriebene Anwendungen vorteilhaft ist. Es besteht daher der Wunsch, den ESR von Feststoffelektrolytkondensatoren möglichst weit zu reduzieren.

In der europäischen Patentschrift EP-A- 340 512 wird die Herstellung eines Feststoffelektrolyten aus 3,4-Ethylen-1,2-dioxythiophen und die Verwendung seines durch oxidative Polymerisation hergestellten, kationischen Polymeren als Feststoffelektrolyt in Elektrolytkondensatoren beschrieben. Poly(3,4-ethylendioxythiophen) als Ersatz von Mangandioxid oder von Ladungstransferkomplexen in Feststoffelektrolytkondensatoren senkt aufgrund der höheren elektrischen Leitfähigkeit den äquivalenten Serienwiderstand des Kondensators und verbessert das Frequenzverhalten.

Neben einem niedrigen ESR erfordern moderne Feststoffelektrolytkondensatoren einen niedrigen Reststrom und eine gute Stabilität gegenüber externen Belastungen. Insbesondere während des Herstellungsprozesses treten bei der Verkapselung der Kondensatoranoden hohe mechanische Belastungen auf, die den Reststrom der Kondensatoranode stark erhöhen können.

Stabilität gegenüber solchen Belastungen, und damit ein geringer Reststrom, lassen sich vor allem durch eine ca. 5-50 $\mu$m dicke Außenschicht aus leitfähigen Polymeren auf der Kondensatoranode erzielen. Eine solche Schicht dient als mechanischer Puffer zwischen der Kondensatoranode und der kathodenseitigen Kontaktierung. Dadurch wird verhindert, dass z.B. die Silberschicht (Kontaktierung) bei mechanischer Belastung mit dem Dielektrikum in direkten Kontakt kommt oder dieses beschädigt und sich dadurch der Reststrom des Kondensators erhöht. Die leitfähige polymere Außenschicht selbst sollte ein so genanntes Selbstheilungsverhalten aufweisen: Kleinere Defekte im Dielektrikum an der äußeren Anodenoberfläche, die trotz der Pufferwirkung auftreten, werden dadurch elektrisch isoliert, dass die Leitfähigkeit der Außenschicht an der Defektstelle durch den elektrischen Strom zerstört wird.

Die Bildung einer dicken polymeren Außenschicht mittels einer in-situ Polymerisation ist sehr schwierig. Die Schichtbildung bedarf dabei sehr vieler Beschichtungszyklen. Durch die große Anzahl an Beschichtungszyklen wird die Außenschicht sehr inhomogen, insbesondere die Kanten der Kondensatoranode werden oftmals unzureichend belegt. Die japanische Patentanmeldung JP-A 2003-188052 beschreibt, dass eine homogene Kantenbelegung eine aufwendige Abstimmung der Prozessparameter erfordert. Dies macht den Herstellungsprozess jedoch sehr anfällig gegenüber Störungen. Zudem muss die in-situ polymerisierte Schicht in der Regel durch Waschen von Restsalzen befreit werden, wodurch Löcher in der Polymerschicht entstehen.

Eine dichte elektrisch leitfähige Außenschicht mit guter Kantenbelegung kann durch elektrochemische Polymerisation erreicht werden. Die elektrochemische Polymerisation erfordert jedoch, dass zunächst ein leitfähiger Film auf der isolierenden Oxidschicht der Kondensatoranode abgeschieden wird und diese Schicht dann für jeden einzelnen Kondensator elektrisch kontaktiert wird. Diese Kontaktierung ist in der Massenfertigung sehr aufwendig und kann die Oxidschicht beschädigen.

In den europäischen Patentanmeldungen EP-A-1713103 und EP-A-1746613 wird eine polymere Außenschicht durch Aufbringung einer Dispersion enthaltend Teilchen eines leitfähigen Polymers und einen Binder erzeugt. Mit diesen

Verfahren lassen sich relativ leicht polymere Außenschichten erzeugen. Nachteilig an diesem Verfahren ist jedoch, dass der ESR bei thermischer Belastung, wie er beispielsweise beim Löten der Kondensatoren entsteht, stark ansteigt. Darüber hinaus ist es wünschenswert, den ESR weiter zu erniedrigen.

Es bestand somit Bedarf, die beiden in EP-A-1713103 und EP-A-1746613 beschriebenen Verfahren zur Herstellung von Feststoffelektrolytkondensatoren derart zu verbessern, dass sich der ESR weiter erniedrigt und auch bei erhöhter thermischer Belastung nicht stark erhöht.

Die Aufgabe bestand daher darin, ein solches Verfahren und die damit verbesserten Kondensatoren bereitzustellen.

Überraschend wurde nun gefunden, dass sich durch Aufbringen einer polymeren Zwischenschicht zwischen Feststoffelektrolyten und polymerer Außenschicht mittels Dispersionen enthaltend Teilchen eines leitfähigen Polypyrrols und/oder Polyanilins und/oder Polythiophens, insbesondere eines leitfähigen Polythiophens, mit einem mittleren Teilchendurchmesser im Bereich von 1-60 nm und einem Binder, diese Anforderungen erfüllen.

Das Zusammenwirken von Durchmesser der leitfähigen Polymerteilchen und der Anwesenheit eines Binders hat bei der Bildung einer polymeren Zwischenschicht überraschenderweise einen erheblichen Einfluss auf den ESR der Elektrolytkondensatoren. Polymere Zwischenschichten hergestellt ohne Binder führen sowohl mit Teilchen einer mittleren Größe von 1-60 nm als auch mit größeren Teilchen zu einem höheren ESR, obwohl die Leitfähigkeit dieser Zwischenschicht deutlich besser ist. Auch polymere Zwischenschichten hergestellt mit Bindern, jedoch aus Teilchen mit einem mittleren Durchmesser von größer 60 nm führen zu einem höheren ESR.

Gegenstand der vorliegenden Erfindung ist daher ein Verfahren zur Herstellung eines Elektrolytkondensators, bei dem auf einen Kondensatorkörper (1), wenigstens umfassend

einen porösen Elektrodenkörper (2) eines Elektrodenmaterials und ein Dielektrikum (3), das die Oberfläche dieses Elektrodenmaterials bedeckt,

einen Feststoffelektrolyten (4) wenigstens enthaltend ein elektrisch leitfähiges Material, der die Dielektrikumsoberfläche ganz oder teilweise bedeckt,

wenigstens eine Dispersion a1) aufgebracht wird, die wenigstens Teilchen b1) eines elektrisch leitfähigen Polymers und ein Dispersionsmittel d1) enthält, und zur Bildung einer elektrisch leitfähigen polymeren Zwischenschicht das Dispersionsmittel d1) wenigstens teilweise entfernt wird,

und wenigstens eine Dispersion a2) aufgebracht wird, die wenigstens Teilchen b2) eines elektrisch leitfähigen Polymers mit einem mittleren Durchmesser von 70-1000 nm, ein Dispersionsmittel d2) und einen Binder c2) enthält, und zur Bildung einer elektrisch leitfähigen polymeren Außenschicht das Dispersionsmittel d2) wenigstens teilweise entfernt und/oder der Binder c2) ausgehärtet wird,

dadurch gekennzeichnet, dass die Dispersion a1) einen Binder c1) enthält und die Teilchen b1) des leitfähigen Polymers in der Dispersion a1) einen mittleren Durchmesser von 1- 60 nm haben.

Die Bestimmung des Durchmessers der Teilchen b1) und b2) erfolgt über eine Ultrazentrifugenmessung. Das allgemeine Vorgehen ist in Colloid Polym. Sci. 267, 1113-1116 (1989) beschrieben. Bei Teilchen b1) und/oder b2), die in der Dispersion quellen, wird die Teilchengröße im gequollenen Zustand bestimmt. Eine Durchmesserverteilung der Teilchen b1) und b2) bezieht sich auf eine Massenverteilung der Teilchen in der Dispersion in Abhängigkeit vom Teilchendurchmesser.

Die Teilchen b1) des leitfähigen Polymers in der Dispersion a1) haben in den erfindungsgemäßen Verfahren bevorzugt einen mittleren Durchmesser von 1-50 nm, besonders bevorzugt von 5-40 nm.

Die Teilchen b1) des leitfähigen Polymers in der Dispersion a1) haben in dem Verfahren bevorzugt einen $d_{90}$ Wert der Durchmesserverteilung von kleiner 100 nm, besonders bevorzugt kleiner 80 nm, ganz besonders bevorzugt kleiner 60 nm.

Die Teilchen b1) des leitfähigen Polymers in der Dispersion a1) haben in dem Verfahren bevorzugt einen $d_{10}$ Wert der Durchmesserverteilung größer 1 nm, besonders bevorzugt größer 3 nm, ganz besonders bevorzugt größer 5nm.

Die Teilchen b2) des leitfähigen Polymers in der Dispersion a2) haben in den erfindungsgemäßen Verfahren bevorzugt einen mittleren Durchmesser von 90-800 nm, besonders bevorzugt von 100-600 nm.

Die Teilchen b2) des leitfähigen Polymers in der Dispersion a2) haben in dem Verfahren bevorzugt einen $d_{90}$ Wert der Durchmesserverteilung von kleiner 1500 nm, besonders bevorzugt kleiner 1000 nm, ganz besonders bevorzugt kleiner 800 nm.

Die Teilchen b2) des leitfähigen Polymers in der Dispersion a2) haben in dem Verfahren bevorzugt einen $d_{10}$ Wert der Durchmesserverteilung größer 50 nm, besonders bevorzugt größer 70 nm, ganz besonders bevorzugt größer 80nm.

Der $d_{10}$ Wert der Durchmesserverteilung besagt dabei, dass 10% der Gesamtmasse aller Teilchen des leitfähigen Polymers in der Dispersion solchen Teilchen zugeordnet werden kann, die einen Durchmesser kleiner oder gleich dem $d_{10}$ Wert besitzen. Der $d_{90}$ Wert der Durchmesserverteilung besagt, dass 90% der Gesamtmasse aller Teilchen des leitfähigen Polymers in der Dispersion solchen Teilchen zugeordnet werden kann, die einen Durchmesser kleiner oder gleich dem $d_{90}$ Wert besitzen.

Das Elektrodenmaterial bildet im Elektrolytkondensator hergestellt nach dem erfindungsgemäßen Verfahren einen porösen Körper mit großer Oberfläche, und liegt z.B. in Form eines porösen Sinterkörpers oder einer aufgerauten Folie vor. Im Folgenden wird dieser poröse Körper auch kurz als Elektrodenkörper bezeichnet.

Der mit einem Dielektrikum bedeckte Elektrodenkörper wird im Folgenden auch kurz als oxidierter Elektrodenkörper bezeichnet. Die Bezeichnung "oxidierter Elektrodenkörper" umfasst auch solche Elektrodenkörper, die mit einem Dielektrikum bedeckt sind, das nicht durch Oxidation des Elektrodenkörpers hergestellt wurde.

Der mit einem Dielektrikum sowie ganz oder teilweise mit einem Feststoffelektrolyten bedeckte Elektrodenkörper wird im Folgenden auch kurz als Kondensatorkörper bezeichnet.

Unter äußerer Oberfläche des Kondensatorkörpers werden die Außenflächen des Kondensatorkörpers verstanden.

Die elektrisch leitfähige Schicht, die mit dem erfindungsgemäßen Verfahren aus der Dispersion a1) hergestellt wird, bezeichnet man hier als polymere Zwischenschicht.

Die elektrisch leitfähige Schicht, die mit dem erfindungsgemäßen Verfahren aus der Dispersion a2) hergestellt wird, bezeichnet man hier als polymere Außenschicht.

Bei der Angabe von Vorzugsbereichen, die für Dispersion a1) und Dispersion a2) gelten, wird im Folgenden der Einfachheit halber von Dispersion a) gesprochen. Diese Notation bedeutet, dass für die Dispersion a1) und/oder Dispersion a2) der besagte Vorzugsbereich zutrifft. Für den Fall, dass für beide Dispersionen a1) und a2) der gleiche Vorzugsbereich gilt, können sie trotzdem innerhalb dieses Vorzugsbereichs unterschiedlich sein.

Bei der Angabe von Vorzugsbereichen, die für Teilchen b1) und Teilchen b2) gelten, wird im folgenden der Einfachheit halber von Teilchen b) gesprochen. Diese Notation bedeutet, dass für die Teilchen b1) und/oder Teilchen b2) der besagte Vorzugsbereich zutrifft. Für den Fall, dass für beide Teilchen b1) und b2) der gleiche Vorzugsbereich gilt, können sie trotzdem innerhalb dieses Vorzugsbereichs unterschiedlich sein.

Bei der Angabe von Vorzugsbereichen, die für Binder c1) und Binder c2) gelten, wird im folgenden der Einfachheit halber von Binder c) gesprochen. Diese Notation bedeutet, dass für die Binder c1) und/oder Binder c2) der besagte Vorzugsbereich zutrifft. Für den Fall, dass für beide Binder c1) und c2) der gleiche Vorzugsbereich gilt, können sie trotzdem innerhalb dieses Vorzugsbereichs unterschiedlich sein.

Bei der Angabe von Vorzugsbereichen, die für Dispersionmittel d1) und Dispersionsmittel d2) gelten, wird im folgenden der Einfachheit halber von Dispersionsmittel d) gesprochen. Diese Notation bedeutet, dass für die Dispersionsmittel d1) und/oder Dispersionsmittel d2) der besagte Vorzugsbereich zutrifft. Für den Fall, dass für beide Dispersionsmittel d1) und d2) der gleiche Vorzugsbereich zutrifft, können sie trotzdem innerhalb dieses Vorzugsbereichs unterschiedlich sein.

Bevorzugt werden Dispersionen a) eingesetzt, deren Filme im getrockneten Zustand eine spezifische Leitfähigkeit von größer 10 S/cm, besonders bevorzugt größer 20 S/cm, ganz besonders bevorzugt größer 50 S/cm, überaus bevorzugt größer 100 S/cm und in einer besonders bevorzugten Ausführungsform größer 200 S/cm aufweisen.

Die Dispersionen a) enthalten bevorzugt keine oder nur geringe Mengen an Metallen und Übergangsmetallen. Unter Metallen werden hier Metalle oder Metallionen von Haupt- oder Nebengruppenmetallen, letztere im Folgenden auch als Übergangsmetalle bezeichnet, des Periodensystems der Elemente verstanden. Bekanntlich können insbesondere Übergangsmetalle das Dielektrikum schädigen, so dass die hieraus resultierenden erhöhten Restströme die Lebensdauer der Kondensatoren deutlich reduzieren oder gar einen Einsatz der Kondensatoren unter harschen Bedingungen, wie hohen Temperaturen und/oder hoher Luftfeuchte, unmöglich machen.

Die Dispersion a) hat in dem Verfahren bevorzugt einen Gehalt an Metallen kleiner 5000 mg/kg, besonders bevorzugt kleiner 1000 mg/kg, ganz besonders bevorzugt kleiner 200 mg/kg. Als Metalle sind hier beispielsweise Na, K, Mg, Al, Ca, Fe, Cr, Mn, Co, Ni, Cu, Ru, Ce oder Zn genannt.

Die Dispersion a) hat in dem Verfahren bevorzugt einen Gehalt an Übergangsmetallen kleiner 1000 mg/kg, besonders bevorzugt kleiner 100 mg/kg, ganz besonders bevorzugt kleiner 20 mg/kg. Als Übergangsmetalle sind hier beispielsweise Fe, Cu, Cr. Mn, Ni, Ru, Ce, Zn oder Co genannt.

Die Dispersion a) hat in dem Verfahren bevorzugt einen Eisengehalt kleiner 1000 mg/kg, besonders bevorzugt kleiner 100 mg/kg, ganz besonders bevorzugt kleiner 20 mg/kg.

Die niedrigen Konzentrationen an Metallen in den Dispersionen haben den großen Vorteil, dass das Dielektrikum bei Bildung der polymeren Zwischenschicht und/oder der polymeren Außenschicht und im späteren Betrieb des Kondensators nicht geschädigt wird.

Vorzugsweise enthält die Dispersion a) wenigstens einen polymeren, organischen Binder c). Als besonders bevorzugte polymere, organische Binder c) kommen beispielsweise Polyvinylalkohole, Polyvinylpyrrolidone, Polyvinylchloride, Polyvinylacetate, Polyvinylbutyrate, Polyacrylsäureester, Polyacrylsäureamide, Polymethacrylsäureester, Polymethacrylsäureamide, Polyacrylnitrile, Styrol/Acrylsäureester-, Vinylacetat/Acrylsäureester- und Ethylen/Vinylacetat-Copolymerisate, Polybutadiene, Polyisoprene, Polystyrole, Polyether, Polyester, Polycarbonate, Polyurethane, Polyamide, Polyimide, Polysulfone, Melamin-Formaldehyharze, Epoxidharze, Siliconharze oder Cellulosen in Frage. Weiterhin kommen bevorzugt als polymere organische Binder c) auch solche in Frage, die durch Zugabe von Vernetzern wie

beispielsweise Melaminverbindungen, verkappten Isocyanaten oder funktionellen Silanen, wie z.B. 3-Glycidoxypropyltrialkoxysilan, Tetraethoxysilan und Tetraethoxysilanhydrolysat, oder vernetzbaren Polymeren wie z.B. Polyurethanen, Polyacrylaten oder Polyolefinen und anschließende Vernetzung erzeugt werden. Solche als polymere Binder c) geeigneten Vernetzungsprodukte können auch beispielsweise durch Reaktion der zugegebenen Vernetzer mit gegebenenfalls in der Dispersion a) enthaltenen polymeren Anionen gebildet werden. Bevorzugt sind solche Binder c), die eine ausreichende Temperaturstabilität aufweisen, um den Temperaturbelastungen zu widerstehen, denen die fertigen Kondensatoren später ausgesetzt werden, z.B. Löttemperaturen von 220 bis 260°C.

Der Feststoffanteil des polymerem Binders c) in der Dispersion a) beträgt 0,1 - 90 Gewichtsprozent (Gew.-%), bevorzugt 0,5 - 30 Gew.-% und ganz besonders bevorzugt 0.5 - 10 Gew.-%.

Die Dispersionen a) können ein oder mehrere Dispersionsmittel d) enthalten. Als Dispersionsmittel d) seien beispielsweise folgende Lösungsmittel genannt: aliphatische Alkohole wie Methanol, Ethanol, i-Propanol und Butanol; aliphatische Ketone wie Aceton und Methylethylketon; aliphatische Carbonsäureester wie Essigsäureethylester und Essigsäurebutylester; aromatische Kohlenwasserstoffe wie Toluol und Xylol; aliphatische Kohlenwasserstoffe wie Hexan, Heptan und Cyclohexan; Chlorkohlenwasserstoffe wie Dichlormethan und Dichlorethan; aliphatische Nitrile wie Acetonitril, aliphatische Sulfoxide und Sulfone wie Dimethylsulfoxid und Sulfolan; aliphatische Carbonsäureamide wie Methylacetamid, Dimethylacetamid und Dimethylformamid; aliphatische und araliphatische Ether wie Diethylether und Anisol. Weiterhin kann auch Wasser oder ein Gemisch aus Wasser mit den vorgenannten organischen Lösungsmitteln als Dispersionsmittel d) verwendet werden.

Bevorzugte Dispersionsmittel d) sind Wasser oder andere protische Lösungsmittel wie Alkohole, z.B. Methanol, Ethanol, i-Propanol und Butanol, sowie Mischungen von Wasser mit diesen Alkoholen, besonders bevorzugtes Lösungsmittel ist Wasser.

Gegebenenfalls kann auch der Binder c) als Dispersionsmittel d) fungieren.

Der Begriff Polymere umfasst im Sinne der Erfindung alle Verbindungen mit mehr als einer gleichen oder unterschiedlichen Wiederholungseinheit.

Unter leitfähigen Polymeren wird hier insbesondere die Verbindungsklasse der $\pi$-konjugierten Polymere verstanden, die nach Oxidation oder Reduktion eine elektrische Leitfähigkeit besitzen. Bevorzugt werden solche $\pi$-konjugierten Polymere unter leitfähigen Polymeren verstanden, die nach Oxidation elektrische Leitfähigkeit in der Größenordnung von mindestens 1$\mu$S $cm^{-1}$ besitzen.

Die Teilchen b) des elektrisch leitfähigen Polymers in der Dispersion a) enthalten bevorzugt wenigstens ein Polythiophen, Polypyrrol oder Polyanilin, die gegebenenfalls substituiert sind.

Besonders bevorzugt enthalten die Teilchen b) des elektrisch leitfähigen Polymers wenigstens ein Polythiophen mit wiederkehrenden Einheiten der allgemeinen Formel (I) oder der allgemeinen Formel (II) oder der allgemeinen Formel (X) oder wiederkehrenden Einheiten der Formeln (I) und (II) oder wiederkehrenden Einheiten der Formeln (I) und (X) oder wiederkehrenden Einheiten der Formeln (II) und (X) oder wiederkehrenden Einheiten der Formeln (I), (II) und (X)

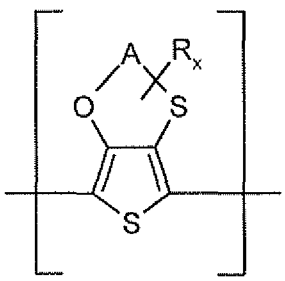

(I),

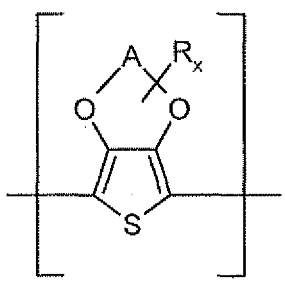

(II),

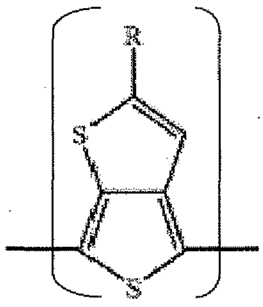

(X)

worin

A für einen gegebenenfalls substituierten $C_1$-$C_5$-Alkylenrest steht,

R unabhängig voneinander für H, einen linearen oder verzweigten, gegebenenfalls substituierten $C_1$-$C_{18}$-Alkylrest, einen gegebenenfalls substituierten $C_5$-$C_{12}$-Cycloalkylrest, einen gegebenenfalls substituierten $C_6$-$C_{14}$-Arylrest, einen gegebenenfalls substituierten $C_7$-$C_{18}$-Aralkylrest, einen gegebenenfalls substituierten $C_1$-$C_4$-Hydroxyalkylrest oder einen Hydroxylrest steht,

x für eine ganze Zahl von 0 bis 8 steht und

für den Fall, dass mehrere Reste R an A gebunden sind, diese gleich oder unterschiedlich sein können.

Die allgemeinen Formeln (I) und (II) sind so zu verstehen, dass x Substituenten R an den Alkylenrest A gebunden sein können.

Besonders bevorzugt sind Polythiophene mit wiederkehrenden Einheiten der allgemeinen Formel (I) oder (II) oder wiederkehrenden Einheiten der allgemeinen Formel (I) und (II), worin A für einen gegebenenfalls substituierten $C_2$-$C_3$-Alkylenrest und x für 0 oder 1 steht.

Ganz besonders bevorzugt als leitfähiges Polymer der Teilchen b) ist Poly(3,4-ethylendioxythiophen), das gegebenenfalls substituiert ist.

Unter dem Präfix Poly- ist im Rahmen der Erfindung zu verstehen, dass mehr als eine gleiche oder verschiedene wiederkehrende Einheiten im Polymeren bzw. Polythiophen enthalten ist. Die Polythiophene enthalten insgesamt n wiederkehrende Einheiten der allgemeinen Formel (I) oder der allgemeinen Formel (II) oder der allgemeinen Formel (X) oder der allgemeinen Formeln (I) und (II) oder der allgemeinen Formeln (I) und (X) oder der allgemeinen Formeln (II) und (X) oder der allgemeinen Formeln (I), (II) und (X), wobei n eine ganze Zahl von 2 bis 2000, bevorzugt 2 bis 100, ist. Die wiederkehrenden Einheiten der allgemeinen Formel (I) oder der allgemeinen Formel (II) oder der allgemeinen Formel (X) oder die wiederkehrenden Einheiten der allgemeinen Formeln (I) und (II) oder die wiederkehrenden Einheiten der allgemeinen Formeln (I) und (X) oder die wiederkehrenden Einheiten der allgemeinen Formeln (II) und (X) oder die wiederkehrenden Einheiten der allgemeinen Formeln (I), (II) und (X) können innerhalb eines Polythiophens jeweils gleich oder verschieden sein. Bevorzugt sind Polythiophene mit jeweils gleichen wiederkehrenden Einheiten der allgemeinen Formel (I) oder der allgemeinen Formel (II) oder der allgemeinen Formel (X) oder mit jeweils gleichen wiederkehrenden Einheiten der allgemeinen Formeln (I) und (II), oder der allgemeinen Formeln (I) und (X), oder der allgemeinen Formeln (II) und (X), oder mit jeweils gleichen wiederkehrenden Einheiten der allgemeinen Formeln (I), (II) und (X). Besonders bevorzugt sind Polythiophene mit jeweils gleichen wiederkehrenden Einheiten der allgemeinen Formel (I) oder der allgemeinen Formel (II) oder mit jeweils gleichen wiederkehrenden Einheiten der allgemeinen Formeln (I) und (II).

An den Endgruppen tragen die Polythiophene bevorzugt jeweils H.

$C_1$-$C_5$-Alkylenreste A sind im Rahmen der Erfindung bevorzugt Methylen, Ethylen, n-Propylen, n-Butylen oder n-Pentylen. $C_1$-$C_{18}$-Alkyl R stehen bevorzugt für lineare oder verzweigte $C_1$-$C_{18}$-Alkylreste wie Methyl, Ethyl, n- oder iso-Propyl, n-, iso-, sec- oder tert-Butyl, n-Pentyl, 1-Methylbutyl, 2-Methylbutyl, 3-Methylbutyl, 1-Ethylpropyl, 1,1-Dimethylpropyl, 1,2-Dimethylpropyl, 2,2-Dimethylpropyl, n-Hexyl, n-Heptyl, n-Octyl, 2-Ethylhexyl, n-Nonyl, n-Decyl, n-Undecyl, n-Dodecyl, n-Tridecyl, n-Tetradecyl, n-Hexadecyl oder n-Octadecyl, $C_5$-$C_{12}$-Cycloalkylreste R stehen beispielsweise für Cyclopentyl, Cyclohexyl, Cycloheptyl, Cyclooctyl, Cyclononyl oder Cyclodecyl, $C_6$-$C_{14}$-Arylreste R stehen beispielsweise für Phenyl oder Naphthyl, und $C_7$-$C_{18}$-Aralkylreste R beispielsweise für Benzyl, o-, m-, p-Tolyl, 2,3-, 2,4-, 2,5-, 2,6-, 3,4-,

3,5-Xylyl oder Mesityl. Die vorangehende Aufzählung dient der beispielhaften Erläuterung der Erfindung und ist nicht als abschließend zu betrachten.

Als gegebenenfalls weitere Substituenten der Reste A und/oder der Reste R kommen im Rahmen der Erfindung zahlreiche organische Gruppen in Frage, beispielsweise Alkyl-, Cycloalkyl-, Aryl-, Aralkyl-, Alkoxy, Halogen-, Ether-, Thioether-, Disulfid-, Sulfoxid-, Sulfon-, Sulfonat-, Amino-, Aldehyd-, Keto-, Carbonsäureester-, Carbonsäure-, Carbonat-, Carboxylat-, Cyano-, Alkylsilan- und Alkoxysilangruppen sowie Carboxylamidgruppen.

Als Substituenten für Polyanilin oder Polypyrrol kommen beispielsweise die oben aufgeführten Reste A und R und/oder die weiteren Substituenten der Reste A und R in Frage. Bevorzugt sind unsubstituierte Polyaniline.

Der Rahmen der Erfindung umfasst alle oben stehenden und im Folgenden aufgeführten, allgemeinen oder in Vorzugsbereichen genannten Restedefinitionen, Parameter und Erläuterungen untereinander, also auch zwischen den jeweiligen Bereichen und Vorzugsbereichen in beliebiger Kombination.

Die in den Teilchen b) in dem bevorzugten Verfahren eingesetzten Polythiophene können neutral oder kationisch sein. In bevorzugten Ausführungsformen sind sie kationisch, wobei sich "kationisch" nur auf die Ladungen bezieht, die auf der Polythiophenhauptkette sitzen. Je nach Substituent an den Resten R können die Polythiophene positive und negative Ladungen in der Struktureinheit tragen, wobei sich die positiven Ladungen auf der Polythiophenhauptkette und die negativen Ladungen gegebenenfalls an den durch Sulfonat- oder Carboxylatgruppen substituierten Resten R befinden. Dabei können die positiven Ladungen der Polythiophenhauptkette zum Teil oder vollständig durch die gegebenenfalls vorhandenen anionischen Gruppen an den Resten R abgesättigt werden. Insgesamt betrachtet können die Polythiophene in diesen Fällen kationisch, neutral oder sogar anionisch sein. Dennoch werden sie im Rahmen der Erfindung alle als kationische Polythiophene betrachtet, da die positiven Ladungen auf der Polythiophenhauptkette maßgeblich sind. Die positiven Ladungen sind in den Formeln nicht dargestellt, da ihre genaue Zahl und Position nicht einwandfrei feststellbar sind. Die Anzahl der positiven Ladungen beträgt jedoch mindestens 1 und höchstens n, wobei n die Gesamtanzahl aller wiederkehrenden Einheiten (gleicher oder unterschiedlicher) innerhalb des Polythiophens ist.

Zur Kompensation der positiven Ladung, soweit dies nicht bereits durch die gegebenenfalls Sulfonat- oder Carboxylat-substituierten und somit negativ geladenen Reste R erfolgt, benötigen die kationischen Polythiophene Anionen als Gegenionen.

Gegenionen können monomere oder polymere Anionen, letztere im Folgenden auch als Polyanionen bezeichnet, sein. Die Gegenionen können im Rahmen der Erfindung in der Dispersion a1) und der Dispersion a2) gleich oder unterschiedlich sein.

Polymere Anionen sind gegenüber monomeren Anionen bevorzugt, da sie zur Filmbildung beitragen und aufgrund ihrer Größe zu thermisch stabileren, elektrisch leitfähigen Filmen führen.

Polymere Anionen können hier beispielsweise Anionen polymerer Carbonsäuren, wie Polyacrylsäuren, Polymethacrylsäure oder Polymaleinsäuren, oder polymerer Sulfonsäuren, wie Polystyrolsulfonsäuren und Polyvinylsulfonsäuren. Diese Polycarbon- und -sulfonsäuren können auch Copolymere von Vinylcarbon- und Vinylsulfonsäuren mit anderen polymerisierbaren Monomeren, wie Acrylsäureestern und Styrol, sein.

Bevorzugt ist in den genannten Teilchen b) als polymeres Anion ein Anion einer polymeren Carbon- oder Sulfonsäure, wobei die polymeren Anionen in der Dispersion a1) und a2) unterschiedlich sein können.

Besonders bevorzugt als polymeres Anion ist das Anion der Polystyrolsulfonsäure (PSS).

Das Molekulargewicht der die Polyanionen liefernden Polysäuren beträgt vorzugsweise 1 000 bis 2 000 000, besonders bevorzugt 2 000 bis 500 000. Die Polysäuren oder ihre Alkalisalze sind im Handel erhältlich, z.B. Polystyrolsulfonsäuren und Polyacrylsäuren, oder aber nach bekannten Verfahren herstellbar (siehe z.B. Houben Weyl, Methoden der organischen Chemie, Bd. E 20 Makromolekulare Stoffe, Teil 2, (1987), S. 1141 u.f.).

Polymere(s) Anion(en) und elektrisch leitende Polymere können in der Dispersion a) insbesondere in einem Gewichtsverhältnis von 0,5:1 bis 50:1, bevorzugt von 1:1 bis 30:1, besonders bevorzugt 2:1 bis 20:1 enthalten sein. Das Gewicht der elektrisch leitende Polymere entspricht hierbei der Einwaage der eingesetzten Monomere unter Annahme, dass bei der Polymerisation vollständiger Umsatz erfolgt.

Als monomere Anionen dienen beispielsweise solche von $C_1$-$C_{20}$-Alkansulfonsäuren, wie der Methan-, Ethan-, Propan-, Butan- oder höheren Sulfonsäuren wie der Dodecansulfonsäure, von aliphatischen Perfluorsulfonsäuren, wie der Trifluormethansulfonsäure, der Perfluorbutansulfonsäure oder der Perfluoroctansulfonsäure, von aliphatischen $C_1$-$C_{20}$-Carbonsäuren wie der 2-Ethylhexylcarbonsäure, von aliphatischen Perfluorcarbonsäuren, wie der Trifluoressigsäure oder der Perfluoroctansäure, und von aromatischen, gegebenenfalls durch $C_1$-$C_{20}$-Alkylgruppen substituierten Sulfonsäuren wie der Benzolsulfonsäure, o-Toluolsulfonsäure, p-Toluolsulfonsäure oder der Dodecylbenzolsulfonsäure und von Cycloalkansulfonsäuren wie Camphersulfonsäure oder Tetrafluoroborate, Hexafluorophosphate, Perchlorate, Hexafluoroantimonate, Hexafluoroarsenate oder Hexachloroantimonate.

Bevorzugt als monomere Anionen sind die Anionen der p-Toluolsulfonsäure, Methansulfonsäure oder Camphersulfonsäure.

Kationische Polythiophene, die zur Ladungskompensation Anionen als Gegenionen enthalten, werden in der Fachwelt auch oft als Polythiophen/(Poly-)Anion-Komplexe bezeichnet.

Die Dispersion a) kann außerdem weitere Komponenten enthalten wie oberflächenaktive Substanzen, z.B. ionische und/oder nichtionische Tenside; Haftvermittler, wie z.B. organofunktionelle Silane bzw. deren Hydrolysate, z.B. 3-Glycidoxypropyltrialkoxysilan, 3-Aminopropyltriethoxysilan, 3-Mercaptopropyltrimethoxysilan, 3-Metacryloxypropyltrimethoxysilan, Vinyltrimethoxysilan oder Octyltriethoxysilan; Vernetzer wie Melaminverbindungen, verkappte Isocyanate, funktionelle Silane - z.B. Tetraethoxysilan, Alkoxysilanhydrolysate, z.B. auf Basis von Tetraethoxysilan, Epoxysilane wie 3-Glycidoxypropyltrialkoxysilan - Polyurethane, Polyacrylate oder Polyolefindispersionen oder weitere Additive.

Im Rahmen der Erfindung kann die Dispersion a1) und/oder die Dispersion a2) oberflächenaktive Substanzen, Haftvermittler,Vernetzer und weitere Additive entweder jeweils alleine oder in jeder beliebigen Kombination davon enthalten.

Bevorzugt enthalten die Dispersionen a) weitere Additive, die die Leitfähigkeit steigern, wie z.B. ethergruppenhaltige Verbindungen, wie z.B. Tetrahydofuran; lactongruppenhaltige Verbindungen wie $\gamma$-Butyrolacton, $\gamma$-Valerolacton; amid- oder lactamgruppenhaltige Verbindungen wie Caprolactam, N-Methylcaprolactam, N,N-Dimethylacetamid, N-Methylacetamid, N,N-Dimethylformamid (DMF), N-Methylformamid, N-Methylformanilid, N-Methylpyrrolidon (NMP), N-Octylpyrrolidon, Pyrrolidon; Sulfone und Sulfoxide, wie z.B. Sulfolan (Tetramethylensulfon), Dimethylsulfoxid (DMSO); Zucker oder Zuckerderivate, wie z.B. Saccharose, Glucose, Fructose, Lactose, Zuckeralkohole, wie z.B. Sorbit, Mannit; Imide, wie z.B. Succinimid oder Maleimid; Furanderivate, wie z.B. 2- Furancarbonsäure, 3-Furancarbonsäure, und/oder Di- oder Polyalkohole, wie z.B. Ethylenglycol, Glycerin oder Di- bzw. Triethylenglycol. Besonders bevorzugt werden als leitfähigkeitserhöhende Additive Tetrahydrofuran, N-Methylformamid, N-Methylpyrrolidon, Ethylenglycol, Dimethylsulfoxid oder Sorbit eingesetzt. Die weiteren Additive können entweder jeweils alleine oder in jeder beliebigen Kombination davon in der Dispersion a1) und der Disperison a2) enthalten sein, und sie können in der Dispersion a1) und der Dispersion a2) unterschiedlich sein.

Die Dispersionen a) können einen pH Wert von 1 bis 14 haben, bevorzugt ist ein pH Wert von 1 bis 8, besonders bevorzugt ist ein pH Wert von 4 bis 8. Vor allem für korrosionsempfindliche Dielektrika, wie beispielsweise Aluminiumoxide oder Nioboxide, werden Dispersionen bevorzugt mit einem pH Wert von 4 bis 8, um das Dielektrikum nicht zu schädigen.

Zur Einstellung des pH Werts können den Dispersionen beispielsweise Basen oder Säuren zugesetzt werden. Bevorzugt sind solche Zusätze, die die Filmbildung der Dispersionen nicht beeinträchtigen und bei höheren Temperaturen, z.B. Löttemperaturen, nicht flüchtig sind, sondern unter diesen Bedingungen in der polymeren Zwischenschicht und/oder der polymeren Außenschicht verbleiben, wie z.B. die Basen 2-Dimethylaminoethanol, 2,2'-Iminodiethanol oder 2,2',2"-Nitrilotriethanol und die Säure Polystyrolsulfonsäure.

Die Viskosität der Dispersion a1) kann je nach Aufbringungsart zwischen 0,1 und 1000 mPa·s (gemessen bei 20°C und einer Scherrate von 100 $s^{-1}$ mit einem Rheometer) betragen. Bevorzugt beträgt die Viskosität 0.5 bis 200 mPa-s, besonders bevorzugt zwischen 0.5 bis 100 mPa·s, ganz besonders bevorzugt 1 bis 70 mPa·s.

Die Viskosität der Dispersion a2) kann je nach Aufbringungsart zwischen 0,1 und 100 000 mPa·s (gemessen bei 20°C und einer Scherrate von 100 $s^{-1}$ mit einem Rheometer) betragen. Bevorzugt beträgt die Viskosität 1 bis 10000 mPa-s, besonders bevorzugt zwischen 10 bis 1000 mPa·s, ganz besonders bevorzugt 30 bis 500 mPa·s.

Das elektrisch leitfähige Material des Feststoffelektrolyten kann ein leitfähiges Polymer oder nicht polymeres leitfähiges Material, wie beispielsweise Ladungstransferkomplexe, wie z.B. TCNQ (7,7,8,8-Tetracyano-1,4-chinodimethan), Mangandioxid oder Salze, wie z.B. solche die ionische Flüssigkeiten bilden können, enthalten.

Bevorzugt enthält der Feststoffelektrolyt ein leitfähiges Polymer. Als leitfähige Polymere können die oben erwähnten leitfähigen Polymere verwendet werden, die auch für die polymere Zwischenschicht und/oder polymere Außenschicht eingesetzt werden. Besonders bevorzugt enthält der Feststoffelektrolyt als leitfähiges Polymer Poly(3,4-ethylendioxythiophen)/ Polystyrolsulfonsäure.

Der Feststoffelektrolyt bildet vorzugsweise auf der Dielektrikumsoberfläche eine Schicht mit einer Dicke kleiner 1000 nm, besonders bevorzugt kleiner 200 nm, ganz besonders bevorzugt kleiner 50 nm.

Die Bedeckung des Dielektrikums mit dem Feststoffelektrolyten kann folgendermaßen bestimmt werden: Die Kapazität des Kondensators wird im trockenen und feuchten Zustand bei 120 Hz gemessen. Der Bedeckungsgrad ist das Verhältnis der Kapazität im trockenen Zustand zu der Kapazität im feuchten Zustand ausgedrückt in Prozent. Trockener Zustand bedeutet, dass der Kondensator über mehrere Stunden bei erhöhter Temperatur (80-120°C) getrocknet wurde, bevor er vermessen wird. Feuchter Zustand bedeutet, dass der Kondensator über mehrere Stunden einer gesättigten Luftfeuchte bei erhöhtem Druck, beispielsweise in einem Dampfdruckkessel, ausgesetzt wird. Die Feuchtigkeit dringt dabei in Poren ein, die vom Feststoffelektrolyten nicht bedeckt sind, und wirkt dort als Flüssigelektrolyt.

Die Bedeckung des Dielektrikums durch den Feststoffelektrolyten ist vorzugsweise größer als 50 %, besonders bevorzugt größer als 70 %, ganz besonders bevorzugt größer als 80 %.

Die polymere Zwischenschicht befindet sich bevorzugt, wie schematisch und beispielhaft in Fig. 2 dargestellt, im gesamten oder einem Teil des äußeren Randbereich des Kondensatorkörpers. Unter äußerem Randbereich werden die Außenflächen und die unmittelbar darunter liegende Porenstruktur des Kondensatorkörpers verstanden. Die polymere Zwischenschicht kann die Poren im Randbereich des Kondensatorkörpers ausfüllen oder im Randbereich als Schicht auf der Oberfläche des Kondensatorkörpers liegen. Die polymere Zwischenschicht kann sich auch über den

Randbereich heraus bis ins innere des Kondensatorkörpers erstrecken.

Die polymere Außenschicht befindet sich bevorzugt, wie schematisch und beispielhaft in Fig. 1 und Fig. 2 dargestellt, auf der gesamten oder einem Teil der äußeren Oberfläche des Kondensatorkörpers. Unter äußerer Oberfläche werden die Außenflächen des Kondensatorkörpers verstanden.

Fig. 1 beschreibt eine schematische Darstellung des Aufbaus eines Feststoffelektrolytkondensators am Beispiel eines Tantalkondensators mit

| | |
|---|---|
| 1 | Kondensatorkörper |
| 5 | polymere Außenschicht |
| 6 | Graphit/Silberschicht |
| 7 | Drahtkontakt zum Elektrodenkörper 2 |
| 8 | äußere Kontakte |
| 9 | Verkapselung |
| 10 | Bildausschnitt |

Fig. 2 beschreibt den vergrößerten Bildausschnitt 10 aus Fig. 1 der den schematischer Schichtaufbau des Tantalkondensators mit

| | |
|---|---|
| 10 | Bildausschnitt |
| 2 | poröser Elektrodenkörper (Anode) |
| 3 | Dielektrikum |
| 4 | Feststoffelektrolyt (Kathode) |
| 5 | polymere Außenschicht |
| 6 | Graphit/Silberschicht |
| 11 | polymere Zwischenschicht |

wiedergibt.

Die Dicke der polymeren Zwischenschicht beträgt bevorzugt 0.001-50 μm, besonders bevorzugt 0.01-10 μm, ganz besonders bevorzugt 0.05-5μm, insbesondere besonders bevorzugt 0.1-1μm. Die Schichtdicke der polymeren Zwischenschicht kann im äußeren Randbereich variieren.

Die polymere Zwischenschicht kann bezüglich ihrer Zusammensetzung hinsichtlich der Binder c1) und leitfähigen Polymere eine homogene oder inhomogene Verteilung aufweisen. Bevorzugt werden homogene Verteilungen.

Die polymere Zwischenschicht kann sich aus mehreren polymeren Zwischenschichten zusammensetzen, die unterschiedlich sein können.

Die Dicke der polymeren Außenschicht beträgt bevorzugt 1-1000 μm, besonders bevorzugt 1-100 μm, ganz besonders bevorzugt 2-50 μm, insbesondere besonders bevorzugt 4-20 μm. Die Schichtdicke kann auf der äußeren Oberfläche variieren. Insbesondere kann die Schichtdicke an den Kanten des Kondensatorkörpers dicker oder dünner als auf den Seitenflächen des Kondensatorkörpers sein. Bevorzugt wird jedoch eine nahezu homogene Schichtdicke.

Die polymere Außenschicht kann bezüglich ihrer Zusammensetzung hinsichtlich der Binder c2) und leitfähigen Polymere eine homogene oder inhomogene Verteilung aufweisen. Bevorzugt werden homogene Verteilungen.

Die polymere Außenschicht kann Bestandteil eines Vielschichtsystems sein, das die Außenschicht des Kondensatorkörpers bildet. Es können sich auch weitere funktionelle Schichten auf der polymeren Außenschicht befinden. Ferner können sich mehrere polymere Außenschichten auf dem Kondensatorkörper befinden.

In einer besonders bevorzugten Ausführungsform enthält der nach dem neuen Verfahren hergestellte Elektrolytkondensator einen Feststoffelektrolyten enthaltend Poly(3,4-ethylendioxythiophen) (PEDT) als leitfähiges Material, eine polymere Zwischenschicht enthaltend Polystyrolsulfonsäure (PSS) und Poly(3,4-ethylendioxythiophen) (letzteres wird in der Literatur häufig auch als PEDT/PSS oder PEDOT/PSS bezeichnet) und eine polymere Außenschicht enthaltend Polystyrolsulfonsäure (PSS) und Poly(3,4-ethylendioxythiophen).

In einer ganz besonders bevorzugten Ausführungsform enthält der nach dem neuen Verfahren hergestellte Elektrolytkondensator einen Feststoffelektrolyten enthaltend PEDT/PSS, eine polymere Zwischenschicht enthaltend PEDT/PSS und einen Binder c1) und eine polymere Außenschicht enthaltend PEDT/PSS und einen Binder c2). Der nach den erfindungsgemäßen Verfahren hergestellte Feststoffelektrolytkondensator zeichnet sich durch einen niedrigen Reststrom und niedrigen äquivalenten Serienwiderstand aus. Die polymere Zwischenschicht führt zu einem niedrigeren ESR und zu einer höheren Stabilität des ESR bei thermischer Belastung.

Prinzipiell kann ein solcher erfindungsgemäßer Elektrolytkondensator folgendermaßen hergestellt werden: Zunächst wird z.B. ein Ventilmetall-Pulver mit einer hohen Oberfläche gepresst und zu einem porösen Elektrodenkörper gesintert. Hierbei wird üblicherweise ein elektrischer Kontaktdraht bevorzugt aus einem Ventilmetall wie z. B. Tantal mit in den Elektrodenkörper eingepresst. Es können alternativ auch Metallfolien geätzt werden, um eine poröse Folie zu

erhalten. Bei einem Wickelkondensator wird eine poröse Anodenfolie, die den Elektrodenkörper bildet, und eine Kathodenfolie durch einen Separator getrennt und aufgewickelt.

Der Elektrodenkörper wird beispielsweise durch elektrochemische Oxidation, mit einem Dielektrikum, d. h. einer Oxidschicht, überzogen. Auf dem Dielektrikum wird dann z. B. mittels oxidativer Polymerisation chemisch oder elektrochemisch ein leitfähiges Polymer abgeschieden, welches den Feststoffelektrolyten bildet. Dazu werden Vorstufen zur Herstellung leitfähiger Polymere, ein oder mehrere Oxidationsmittel, und gegebenenfalls Gegenionen, zusammen oder nacheinander auf das Dielektrikum des porösen Elektrodenkörpers aufgebracht und chemisch oxidativ polymerisiert, oder es werden Vorstufen zur Herstellung leitfähiger Polymere und Gegenionen durch elektrochemische Polymerisation auf dem Dielektrikum des porösen Elektrodenkörpers polymerisiert. Zur Bildung des Feststoffelektrolyten können als leitfähiges Material auch Dispersionen oder Lösungen von leitfähigen Polymeren, wie z.B. gegebenenfalls substituierte Polythiophene, Polypyrrole oder Polyaniline, eingesetzt werden. Bevorzugt sind Dispersionen von leitfähigen Polythiophenen auf Basis von Poly(3,4-ethylendioxythiophen), wie sie z.B, in WO 2007/031206 beschrieben werden.

Auf den Kondensatorkörper wird daraufhin erfindungsgemäß eine Dispersion a1) enthaltend wenigstens Teilchen b1) eines elektrisch leitfähigen Polymers, einen Binder c1) und ein Dispersionsmittel d1) aufgebracht und zur Bildung einer polymeren Zwischenschicht das Dispersionsmittel d1) wenigstens teilweise entfernt und/oder der Binder ausgehärtet. Auf den Kondensatorkörper wird daraufhin erfindungsgemäß eine Dispersion a2) enthaltend wenigstens Teilchen b2) eines elektrisch leitfähigen Polymers, einen Binder c2) und ein Dispersionsmittel d2) aufgebracht und zur Bildung einer polymeren Außenschicht das Dispersionsmittel d2) wenigstens teilweise entfernt und/oder der Binder ausgehärtet. Gegebenenfalls werden weitere Schichten auf die polymere Außenschicht aufgebracht. Ein Überzug mit gut leitfähigen Schichten, wie Graphit und Silber, oder ein metallischer Kathodenkörper, wie z.B. bei Aluminium- Wickelkondensatoren, dient als Elektrode zur Ableitung des Stroms. Schließlich wird der Kondensator kontaktiert und eingekapselt.

Weiterhin bevorzugt ist ein Verfahren zur Herstellung von Elektrolytkondensatoren, dadurch gekennzeichnet, dass es sich bei dem Elektrodenmaterial um ein Ventilmetall oder um eine Verbindung mit einem Ventilmetall vergleichbaren elektrischen Eigenschaften handelt.

Als Ventilmetall sind im Rahmen der Erfindung solche Metalle zu verstehen, deren Oxidschichten den Stromfluss nicht in beide Richtungen gleichermaßen ermöglichen: Bei anodisch angelegter Spannung sperren die Oxidschichten der Ventilmetalle den Stromfluss, während es bei kathodisch angelegter Spannung zu großen Strömen kommt, die die Oxidschicht zerstören können. Zu den Ventilmetallen zählen Be, Mg, Al, Ge, Si, Sn, Sb, Bi, Ti, Zr, Hf, V, Nb, Ta und W sowie eine Legierung oder Verbindung von wenigstens einem dieser Metalle mit anderen Elementen. Die bekanntesten Vertreter der Ventilmetalle sind Al, Ta, und Nb. Verbindungen mit einem Ventilmetall vergleichbaren elektrischen Eigenschaften sind solche mit metallischer Leitfähigkeit, welche oxidierbar sind und deren Oxidschichten die vorangehend beschriebenen Eigenschaften besitzen. Beispielsweise besitzt NbO metallische Leitfähigkeit, wird jedoch im Allgemeinen nicht als Ventilmetall betrachtet. Schichten von oxidiertem NbO weisen jedoch die typischen Eigenschaften von Ventilmetalloxidschichten auf, so dass NbO oder eine Legierung oder Verbindung von NbO mit anderen Elementen typische Beispiele für solche Verbindungen mit einem Ventilmetall vergleichbaren elektrischen Eigenschaften sind.

Bevorzugt sind Elektrodenmaterialien aus Tantal, Aluminium und solche Elektrodenmaterialien, die auf Niob oder Nioboxid basieren.

Unter Elektrodenmaterialien, die auf Niob oder Nioboxid basieren, werden solche Materialien verstanden, bei denen Niob oder Nioboxid die Komponente mit dem größten Stoffmengenanteil darstellen.

Bei dem Elektrodenmaterial, das auf Niob oder Nioboxid basiert, handelt es sich bevorzugt um Niob, NbO, ein Nioboxid $NbO_x$, wobei x Werte von 0,8 bis 1,2 annehmen kann, Niobnitrid, Nioboxynitrid oder Mischungen dieser Materialien oder um eine Legierung oder Verbindung von wenigstens einem dieser Materialien mit anderen Elementen handelt.

Bevorzugt als Legierungen sind Legierungen mit wenigstens einem Ventilmetall, wie beispielsweise Be, Mg, Al, Ge, Si, Sn, Sb, Bi, Ti, Zr, Hf, V, Nb, Ta oder W.

Demzufolge sind unter dem Begriff "oxidierbares Metall" nicht nur Metalle, sondern auch eine Legierung oder Verbindung eines Metalls mit anderen Elementen gemeint, sofern sie metallische Leitfähigkeit besitzen und oxidierbar sind.

Die oxidierbaren Metalle werden beispielsweise in Pulverform zu einem porösen Elektrodenkörper gesintert oder es wird einem metallischen Körper eine poröse Struktur aufgeprägt. Letzteres kann z.B. durch Ätzen einer Folie erfolgen. Bevorzugt besitzt der Elektrodenkörper abgerundete Ecken und/oder Kanten, um die äußere Belegung mit der polymeren Außenschicht zu verbessern.

Die porösen Elektrodenkörper werden beispielsweise in einem geeigneten Elektrolyten, wie z.B. Phosphorsäure, durch Anlegen einer Spannung oxidiert. Die Höhe dieser Formierspannung ist abhängig von der zu erzielenden Oxidschichtdicke bzw. der späteren Anwendungsspannung des Kondensators. Bevorzugte Formierspannungen sind 1 bis 800 V, besonders bevorzugt 1 bis 300 V.

Bevorzugt werden zur Herstellung des Elektrodenkörpers Metallpulver mit einer spezifischen Ladung von 1000

bis 1 000000 µC/g, besonders bevorzugt mit einer spezifischen Ladung von 5000 bis 500000 µC/g, ganz besonders bevorzugt mit einer spezifischen Ladung von 5000 bis 300000 µC/g, überaus bevorzugt mit einer spezifischen Ladung von 10000 bis 200000 µC/g' verwendet.

Die spezifische Ladung des Metallpulver berechnet sich dabei wie folgt:

Spezifische Ladung des Metallpulvers = (Kapazität * Anodisierspannung)/ Gewicht des oxidierten Elektrodenkörpers.

Die Kapazität ergibt sich dabei aus der Kapazität des oxidierten Elektrodenkörpers gemessen bei 120 Hz in einem wässrigen Elektrolyten. Die elektrische Leitfähigkeit des Elektrolyten ist dabei hinreichend groß, so dass es bei 120 Hz noch nicht zu einem Kapazitätsabfall aufgrund des elektrischen Widerstands des Elektrolyten kommt. Beispielsweise werden 18%ige wässrige Schwefelsäure-Elektrolyte zur Messung eingesetzt.

Die eingesetzten Elektrodenkörper haben eine Porosität von 10 bis 90 %, bevorzugt von 30 bis 80 %, besonders bevorzugt von 50 bis 80 %.

Die porösen Elektrodenkörper haben einen mittleren Porendurchmesser von 10 bis 10000 nm, bevorzugt von 50 bis 5000 nm, besonders bevorzugt von 100 bis 3000 nm.

Der poröse Elektrodenkörper hat bevorzugt ein Volumen von 0.001 $mm^3$ bis 100000 $mm^3$. Überrachenderweise wurde gefunden, dass die polymere Zwischenschicht insbesondere bei kleinen Elektrodenkörpern den ESR signifikant verringert. Besonders bevorzugt sind daher Elektrodenkörper mit einem Volumen von 0.001 $mm^3$ bis 10 $mm^3$, ganz besonders bevorzugt Elektrodenkörper mit einem Volumen von 0.001 $mm^3$ bis 5 $mm^3$ .

Besonders bevorzugter Gegenstand der vorliegenden Erfindung ist demgemäß ein Verfahren zur Herstellung von Elektrolytkondensatoren, dadurch gekennzeichnet, dass es sich bei dem Ventilmetall oder der Verbindung einem Ventilmetall vergleichbaren elektrischen Eigenschaften um Tantal, Niob, Aluminium, Titan, Zirkonium, Hafnium, Vanadium, eine Legierung oder Verbindung von wenigstens einem dieser Metalle mit anderen Elementen, NbO oder eine Legierung oder Verbindung von NbO mit anderen Elementen handelt.

Das Dielektrikum besteht bevorzugt aus einem Oxid des Elektrodenmaterials. Es enthält gegebenenfalls weitere Elemente und/oder Verbindungen.

Die Kapazität des Kondensators hängt neben der Art des Dielektrikums von der Oberfläche und der Dicke des Dielektrikums ab. Die spezifische Ladung ist ein Maß dafür, wie viel Ladung pro Gewichtseinheit der oxidierte Elektrodenkörper aufnehmen kann. Die spezifische Ladung des Kondensators berechnet sich wie folgt:

Spezifische Ladung des Kondensators = (Kapazität * Nennspannung)/ Gewicht des oxidierten Elektrodenkörpers.

Die Kapazität ergibt sich dabei aus der Kapazität des fertigen Kondensators gemessen bei 120 Hz und die Nennspannung ist die spezifizierte Einsatzspannung des Kondensators (rated voltage). Das Gewicht des oxidierten Elektrodenkörpers bezieht sich auf das reine Gewicht des mit Dielektrikum überzogenen porösen Elektrodenmaterials ohne Polymer, Kontakte und Verkapselungen.

Bevorzugt weisen die nach dem neuen Verfahren hergestellten Elektrolytkondensatoren eine spezifische Ladung von 500 bis 500000 µC/g, besonders bevorzugt eine spezifische Ladung von 2500 bis 250000 µC/g, ganz besonders bevorzugt eine spezifische Ladung von 2500 bis 150000 µC/g, überaus bevorzugt eine spezifische Ladung von 5000 bis 100000 µC/g auf.

Als Vorstufen für die Herstellung leitfähiger Polymere der Teilchen b) in der Dispersion a), im Folgenden auch als Vorstufen bezeichnet, werden entsprechende Monomere oder deren Derivate verstanden. Es können auch Mischungen von unterschiedlichen Vorstufen verwendet werden. Geeignete monomere Vorstufen sind beispielsweise gegebenenfalls substituierte Thiophene, Pyrrole oder Aniline, bevorzugt gegebenenfalls substituierte Thiophene, besonders bevorzugt gegebenenfalls substituierte 3,4-Alkylendioxythiophene, 3,4-Alkylenoxythiathiophene oder Thieno[3,4-b]thiophene.

Als gegebenenfalls substituierte 3,4-Alkylendioxythiophene, 3,4-Alkylenoxythiathiophene oder Thieno[3,4-b]thiophene seien beispielhaft die Verbindungen der allgemeinen Formel (III) oder der allgemeinen Formel (IV) oder der allgemeinen Formel (XI) oder einer Mischung aus Thiophenen der allgemeinen Formeln (III) und (IV) oder einer Mischung aus Thiophenen der allgemeinen Formel (III) und (XI), oder einer Mischung aus Thiophenen der allgemeinen Formel

(IV) und (XI) oder einer Mischung aus Thiophenen der allgemeinen Formel (III), (IV) und (XI)

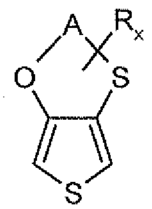

(III)

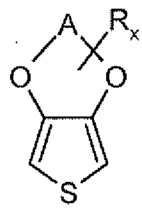

(IV)

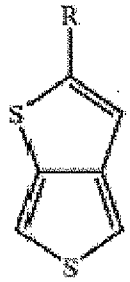

(XI)

aufgeführt,
worin

A für einen gegebenenfalls substituierten $C_1$-$C_5$-Alkylenrest, bevorzugt für einen gegebenenfalls substituierten $C_2$-$C_3$-Alkylenrest, steht,

R für einen linearen oder verzweigten, gegebenenfalls substituierten $C_1$-$C_{18}$-Alkylrest, bevorzugt linearen oder verzweigten, gegebenenfalls substituierten $C_1$-$C_{14}$-Atkylrest, einen gegebenenfalls substituierten $C_5$-$C_{12}$-Cycloalkylrest, einen gegebenenfalls substituierten $C_6$-$C_{14}$-Arylrest, einen gegebenenfalls substituierten $C_7$-$C_{18}$-Aralkylrest, einen gegebenenfalls substituierten $C_1$-$C_4$-Hydroxyalkylrest, bevorzugt gegebenenfalls substituierten $C_1$-$C_2$-Hydroxyalkylrest, oder einen Hydroxylrest steht,

x für eine ganze Zahl von 0 bis 8 steht, bevorzugt von 0 bis 6, besonders bevorzugt für 0 oder 1 steht und

für den Fall, dass mehrere Reste R an A gebunden sind, diese gleich oder unterschiedlich sein können.

Ganz besonders bevorzugte monomere Vorstufen sind gegebenenfalls substituierte 3,4-Ethylendioxythiophene.

Als substituierte 3,4-Ethylendioxythiophene seien beispielhaft die Verbindungen der allgemeinen Formel (V) genannt,

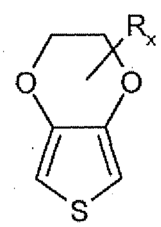

(V)

worin
R und x die für die allgemeine Formeln (III) und (IV) genannte Bedeutung haben.

Unter Derivaten dieser monomeren Vorstufen werden im Sinne der Erfindung beispielsweise Dimere oder Trimere dieser monomeren Vorstufen verstanden. Es sind auch höhermolekulare Derivate, d.h. Tetramere, Pentamere etc. der monomeren Vorstufen als Derivate möglich.

Als Derivate substituierter 3,4-Alkylendioxythiophene seien beispielhaft die Verbindungen der allgemeinen Formel (VI) genannt,

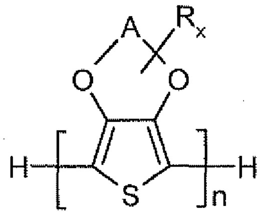

(VI)

worin
n für eine ganze Zahl von 2 bis 20, bevorzugt 2 bis 6, besonders bevorzugt für 2 oder 3 steht,
und
A, R und x die für die allgemeine Formeln (III) und (IV) genannte Bedeutung haben.

Die Derivate können sowohl aus gleichen wie unterschiedlichen Monomereinheiten aufgebaut sein und in reiner Form sowie im Gemisch untereinander und/oder mit den monomeren Vorstufen eingesetzt werden. Auch oxidierte oder reduzierte Formen dieser Vorstufen sind im Sinne der Erfindung von dem Begriff "Vorstufen" umfasst, sofern bei ihrer Polymerisation die gleichen leitfähigen Polymeren entstehen wie bei den vorangehend aufgeführten Vorstufen.

Als Substituenten für die oben genannten Vorstufen, insbesondere für die Thiophene, bevorzugt für die 3,4-Alkylendioxythiophene, kommen die für die allgemeine Formeln (III), (IV) oder (XI) genannten Reste R in Frage.

Als Substituenten für Pyrrole und Aniline kommen beispielsweise die oben aufgeführten Reste A und R und/oder die weiteren Substituenten der Reste A und R in Frage.

Als gegebenenfalls weitere Substituenten der Reste A und/oder der Reste R kommen die im Zusammenhang mit den allgemeinen Formeln (I), (II) oder (X) genannten organischen Gruppen in Frage.

Verfahren zur Herstellung der monomeren Vorstufen für die Herstellung leitfähiger Polymere sowie deren Derivaten sind dem Fachmann bekannt und beispielsweise in L. Groenendaal, F. Jonas, D. Freitag, H. Pielartzik & J. R. Reynolds, Adv. Mater. 12 (2000) 481 - 494 und darin zitierter Literatur beschrieben.

Die für die Herstellung der zu verwendenden Polythiophene erforderlichen 3,4-Alkylen-oxythiathiophene der Formel (III) sind dem Fachmann bekannt oder nach bekannten Verfahren herstellbar (beispielsweise gemäß P. Blanchard, A. Cappon, E. Levillain, Y. Nicolas, P. Frere und J. Roncali, Org. Lett. 4 (4), 2002, S. 607 - 609).

Die für die Herstellung der zu verwendenden Polythiophene erforderlichen Thieno[3,4-b]thiophene der Formel (XI) sind dem Fachmann bekannt oder nach bekannten Verfahren herstellbar (beispielsweise gemäß US2004/0074779A1).

Die Herstellung der Dispersionen erfolgt aus den oben beschriebenen Vorstufen beispielsweise analog zu den in EP-A 440 957 genannten Bedingungen. Eine verbesserte Variante für die Herstellung der Dispersionen stellt der Einsatz von Ionentauscher zur Entfernung des anorganischen Salzgehaltes oder eines Teils davon dar. Eine solche Variante ist beispielsweise in DE-A 19627071 beschrieben. Der Ionentauscher kann beispielsweise mit dem Produkt verrührt werden oder das Produkt wird über eine mit Ionenaustauscher gefüllte Säule gefördert. Durch die Verwendung des Ionenaustauschers können beispielsweise die oben beschriebenen niedrigen Metallgehalte erzielt werden.

Die Teilchengröße der Teilchen b) in der Dispersion a) kann nach der Entsalzung beispielsweise mittels eines Hochdruckhomogenisators verringert werden. Dieser Vorgang kann auch wiederholt werden, um den Effekt zu vergrößern. Besonders hohe Drücke zwischen 100 und 2000 bar haben sich als vorteilhaft erwiesen, um die Teilchengröße stark zu reduzieren.

Auch eine Herstellung eines Polyanilin/Polyanion- oder Polythiophen/Polyanion-Komplexes und anschließende Dispergierung oder Redispergierung in einem oder mehreren Lösungsmittel(n) ist möglich.

Der Feststoffanteil der Teilchen b) des elektrisch leitfähigen Polymers in der Dispersion a) beträgt 0,1 - 90 Gew.-%, bevorzugt 0,5 - 30 Gew.-% und ganz besonders bevorzugt 0.5 - 10 Gew.-%.

Die Teilchen b) des leitfähigen Polymers bilden bevorzugt eine stabile Dispersion. Es können jedoch auch instabile Dispersionen verwendet werden, in dem diese vor Gebrauch beispielsweise geführt, gerollt oder aufgeschüttelt werden, um eine gleichmäßige Verteilung der Teilchen b) zu gewährleisten.

Die Dispersionen a) werden nach bekannten Verfahren, z.B. durch Spincoating, Tränkung, Gießen, Auftropfen, Spritzen, Aufsprühen, Aufrakeln, Bestreichen oder Bedrucken, beispielsweise Ink-jet-, Sieb- oder Tampondrucken, auf den Kondensatorkörper aufgebracht.

Nach dem Aufbringen der Dispersion a) wird das Dispersionsmittel d) vorzugsweise entfernt, damit sich aus den Teilchen b) und gegebenenfalls weiteren Additiven in der Dispersion die polymere Zwischenschicht bzw. die polymere Außenschicht ausbilden kann. Es kann aber auch mindestens ein Teil des Dispersionsmittels d) in der polymeren Zwischenschicht bzw. der polymeren Außenschicht verbleiben. Je nach Art des Dispersionsmittels d) kann dieses auch sowohl vollständig als auch nur der nach teilweiser Entfernung noch verbleibende Teil ausgehärtet werden.

Das Entfernen des Dispersionsmittels d) nach dem Aufbringen der Dispersion kann durch einfaches Verdampfen bei Raumtemperatur erfolgen. Zur Erzielung höherer Verarbeitungsgeschwindigkeiten ist es jedoch vorteilhafter, die

Dispersionsmittel d) bei erhöhten Temperaturen, z.B. bei Temperaturen von 20 bis zu 300°C, bevorzugt 40 bis zu 250°C, zu entfernen. Eine thermische Nachbehandlung kann unmittelbar mit dem Entfernen des Lösungsmittel verbunden oder aber auch in zeitlichem Abstand von der Fertigstellung der Beschichtung vorgenommen werden.

Die Dauer der Wärmebehandlung beträgt in Abhängigkeit von der Art des für die Beschichtung verwendeten Dispersion 5 Sekunden bis mehrere Stunden. Für die thermische Behandlung können auch Temperaturprofile mit unterschiedlichen Temperaturen und Verweilzeiten eingesetzt werden.

Die Wärmebehandlung kann z.B. in der Weise ausgeführt werden, dass man die beschichteten oxidierten Elektrodenkörper mit einer solchen Geschwindigkeit durch eine auf der gewünschten Temperatur befindliche Wärmekammer bewegt, dass die gewünschte Verweilzeit bei der gewählten Temperatur erreicht wird, oder mit einer auf der gewünschten Temperatur befindlichen Heizplatte für die gewünschte Verweilzeit in Kontakt bringt. Des Weiteren kann die Wärmebehandlung beispielsweise in einem Wärmeofen oder mehreren Wärmeöfen mit jeweils unterschiedlichen Temperaturen erfolgen.

Je nach Art des Kondensatorkörpers kann es vorteilhaft sein, die polymere Zwischenschicht durch mehrmaliges Aufbringen der Dispersion a1) und wenigstens teilweise Entfernen des Dispersionsmittels d1) zu bilden, um eine dickere polymere Zwischenschicht zu erzielen.

Je nach Art des Kondensatorkörpers kann es vorteilhaft sein, die polymere Außenschicht durch mehrmaliges Aufbringen der Dispersion a2) und wenigstens teilweise Entfernen des Dispersionsmittels d2) zu bilden, um eine dickere polymere Außenschichten zu erzielen.

Nach Herstellung der polymeren Außenschicht werden auf den Kondensator bevorzugt gegebenenfalls weitere gut leitfähige Schichten wie beispielsweise Graphit- und/oder Silberschichten aufgebracht, der Kondensator kontaktiert und verkapselt.

Mit dem erfindungsgemäßen Verfahren lassen sich auf besonders einfache Weise Feststoffelektrolytkondensatoren mit einer dichten polymeren Außenschicht herstellen, die sich durch einen niedrigen ESR und niedrige Restströme auszeichnen. Darüber hinaus erhöht sich bei nach dem erfindungsgemäßen Verfahren hergestellten Kondensatoren die Stabilität des ESR bei thermischer Belastung. Die nach dem erfindungsgemäßen Verfahren hergestellten Elektrolytkondensatoren sind ebenfalls Gegenstand der Erfindung.

Die erfindungsgemäß hergestellten Elektrolytkondensatoren eignen sich aufgrund ihres niedrigen Reststroms und ihres niedrigen ESR hervorragend zur Verwendung als Bauteil in elektronischen Schaltungen, beispielsweise als Glättungskondensator (filter capacitor) oder Entstörkondensator (decoupling capacitor). Die Verwendung ist auch Gegenstand der Erfindung. Bevorzugt sind elektronische Schaltungen, wie sie sich beispielsweise in Computern (Desktop, Laptop, Server), in Computerperipheriegeräten (z.B. PC Karten), in tragbaren elektronischen Geräten, wie z.B. Mobiltelefonen, Digitalkameras oder Unterhaltungselektronik, in Geräten der Unterhaltungselektronik, wie z.B. in CD/DVD Spielern und Computerspielkonsolen, in Navigationssystemen, in Telekommunikationseinrichtungen, in Haushaltsgeräten, in Spannungsversorgungen oder in der Automobilelektronik befinden.

Die folgenden Beispiele dienen der beispielhaften Erläuterung der Erfindung und sind nicht als Beschränkung aufzufassen.

## Beispiele

**Beispiel 1:** Herstellung von Dispersionen leitfähiger Polymere

A) Poly(3,4-ethylendioxythiothen)/Polystyrolsulfonat-Dispersion mit einer mittleren Teilchengröße größer 60 nm

In einem 5 l Glasreaktor mit Rührer und Thermometer wurden 1736 g entionisiertes Wasser, 660 g einer wässrigen Polystyrolsulfonsäurelösung mit einem mittleren Molekulargewicht $M_w$ von 70000 und einem Feststoffgehalt von 3,8 Gew.-% vorgelegt. Die Reaktionstemperatur wurde zwischen 20 und 25°C gehalten. Unter Rühren wurden 10,2 g 3,4-Ethylendioxythiophen zugegeben. Die Lösung wurde 30 Minuten (min) gerührt. Anschließend wurden 0,06 g Eisen(III)-sulfat und 19 g Natriumpersulfat zugegeben und die Lösung weitere 24 Stunden (h) gerührt. Nach Abschluss der Reaktion wurden zur Entfernung anorganischer Salze 200 ml eines stark sauren Kationenaustauschers (Lewatit S100, Lanxess AG) und 500 ml eines schwach basischen Anionenaustauschers (Lewatit MP 62, Lanxess AG) zugegeben und die Lösung weitere 2 h gerührt. Der Ionenauschtauscher wurde abfiltriert.

Zur Bestimmung des Feststoffgehalts wurden 5 g der Dispersion 14 Stunden bei 100°C getrocknet. Die Dispersion A hatte einen Feststoffgehalt von 1%.

Die Dispersion A hatte folgende Teilchengrößenverteilung:

| | |
|---|---|
| $d_{10}$ | 60 nm |
| $d_{50}$ | 163 nm |

(fortgesetzt)

| | |
|---|---|
| $d_{90}$ | 271 nm |

Der Durchmesser der Teilchen b) des leitfähigen Polymers bezieht sich auf eine Massenverteilung der Teilchen b) in der Dispersion in Abhängigkeit vom Teilchendurchmesser. Die Bestimmung erfolgte über eine Ultrazentrifugenmessung. Die Teilchengröße wurde im gequollenen Zustand der Teilchen bestimmt.

B) Poly(3,4-ethylendioxythiophen)/Polystyrolsulfonat-Dispersion mit einer mittleren Teilchengröße kleiner 60 nm

Ein Teil der PEDT/PSS Dispersion A wurde zehnmal bei einem Druck von 700 bar mit einem Hochdruckhomogenisator homogenisiert.

Die so hergestellte Dispersion B wies folgende Teilchengrößenverteilung auf:

| | |
|---|---|
| $d_{10}$ | 20 nm |
| $d_{50}$ | 28 nm |
| $d_{90}$ | 44 nm |

Der Feststoffgehalt der Dispersion B betrug 1%.

10 g der Dispersion B wurden 0.5 g Dimethylsufoxid (DMSO) zugesetzt und zu einer Dispersion verrührt. Ein Teil dieser Dispersion wurde auf einen Glasobjektträger (26 mm*26 mm*1 mm) mittels eines Spincoaters (Chemat Technology KW-4A) aufgeschleudert. Die Probe wurde 10 min bei 120°C getrocknet- Anschließend wurden zwei gegenüberliegende Kanten des Objektträgers mit Leitsilber beschichtet. Nach Trocknung des Leitsilbers wurden die beiden Silberstreifen kontaktiert und mit einem Keithley 199 Multimeter der Oberflächenwiderstand ermittelt. Die Schichtdicke wurde mit einem Tencor Alpha Step 500 Surface Profiler bestimmt. Aus Oberflächenwiderstand und Schichtdicke d wurde die spezifische Leitfähigkeit $\sigma$ nach $\sigma = 1/(R_{\square} * d)$ ermittelt. Die Schichtdicke betrug 75 nm und die spezifische Leitfähigkeit betrug 430 S/cm.

Die Viskosität der Dispersion betrug 30 mPa*s bei einer Scherrate von 100 Hz und 20°C. Eine ICP-Analyse der Metallgehalte der Dispersion B ergab folgende Werte:

| | |
|---|---|
| Natrium (Na): | 130 mg/kg |
| Magnesium (Mg): | 0,62 mg/kg |
| Aluminium (Al): | 1,1 mg/kg |
| Silicium (Si): | 1,3 mg/kg |
| Phosphor (P): | 6,3 mg/kg |
| Kalium (K): | 0,71 mg/kg |
| Calcium (Ca): | 4,0 mg/kg |
| Chrom (Cr): | 0,17 mg/kg |
| Eisen (Fe): | 1,07 mg/kg |
| Zink (Zn): | <0,01 mg/kg |

C)Poly(3,4-ethylendioxythiophen)Polystyrolsulfonat-Dispersion für polymere Außenschicht

In einem 5 l-Glasreaktor mit Rührer und Thermometer wurden 2,5 l demineralisiertes Wasser vorgelegt. Unter Rühren wurden 214,2 g p-Toluolsufonsäure-monohydrat und 2,25 g Eisen(III)sulfat-heptahydrat eingetragen. Nachdem sich alles gelöst hatte, wurden 85,8 g 3,4-Ethylendioxythiophen zugegeben und 30 Minuten gerührt. Anschließend wurden 192,9 g Natriumperoxodisulfat unter Rühren eingetragen und die Mischung weitere 24 Stunden bei Raumtemperatur gerührt. Nach Reaktionsende wurde das entstandene PEDT/Toluolsulfonat-Pulver auf einer Porzellannutsche abfiltriert, mit 3 l demineralisiertem Wasser gewaschen und zuletzt 6 Stunden bei 100°C getrocknet. Man erhielt 89 g eines blauschwarzen PEDT-Toluolsufonat-Pulvers.

In einem Becherglas mit Rührer wurden 180 g der PEDT/PSS-Dispersion A, 10 g eines Sulfopolyesters (Eastek 1100, Feststoffgehalt 30%, Eastman), 8 g Dimethylsulfoxid, 1 g 3-Glycidoxypropyltrimethoxysilan (Silquest A-187, OSi Specialties) und 0,4 g Netzmittel (Dynol 604, Air Products) eine Stunde intensiv gemischt. Anschließend wurden 2 g des PEDT/Toluolsulfonat-Pulvers mittels einer Perlmühle-Dissolver-Einheit eindispergiert. Dazu wurden 300 g Zirkonoxidperlen (Ø 1 mm) zugegeben und die Mischung 1 Stunde unter Kühlung mit Wasser bei 7000U/min gerührt. Zuletzt

wurden die Mahlperlen über ein 0,8 μm Sieb abgetrennt. Diese erhaltene Dispersion C wies einen Feststoffgehalt von 4,7 % und eine Viskosität von 200 mPas auf. Die spezifische Leitfähigkeit betrug 90 S/cm.

**Beispiel 2:** Herstellung von Kondensatoren nach dem erfindungsgemäßen Verfahren

2.1. Herstellung von oxidierten Elektrodenkörpern:

Tantalpulver mit einer spezifischen Kapazität von 30 000 μFV/g wurde unter Einschluss eines Tantaldrahtes zu Pellets gepresst und gesintert, um einen Elektrodenkörper mit den Abmessungen 0.8 mm * 0.8 mm* 1 mm zu bilden. 15 dieser porösen Elektrodenkörper wurden zur Bildung eines Dielektrikums in einem Phosphorsäureelektrolyten auf 100 V anodisiert.

2.2 Herstellung des Feststoffelektzolyten

100 g der Dispersion B aus Beispiel 1 und 4g Dimethylsufoxid (DMSO) wurden in einem Becherglas mit Rührer intensiv zu einer Dispersion B1 gemischt.

Die oxidierten Elektrodenkörper wurden in dieser Dispersion B1 1 min getränkt. Danach erfolgte eine Trocknung bei 120°C für 10 min. Tränkung und Trocknung wurden neun weitere Male durchgeführt.

2.3 Herstellung der erfindungsgemäßen polymeren Zwischenschicht

100 g der Dispersion B (aus Beispiel 1), 3 g eines Sulfopolyesters (Eastek 1100, Feststoffgehalt 30% in Wasser) und 4g Dimethylsufoxid (DMSO) wurden in einem Becherglas mit Rührer intensiv zu einer Dispersion B2 gemischt. Die spezifische Leitfähigkeit der Dispersion B2 betrug 200 S/cm.

Die oxidierten Elektrodenkörper wurden in dieser Dispersion B2 1 min getränkt. Danach erfolgte eine Trocknung bei 120°C für 10 min. Tränkung und Trocknung wurden zwei weitere Male durchgeführt.

2.4 Herstellung einer polymeren Außenschicht

Die Kondensatorkörper wurden in der Dispersion C aus Beispiel 1 getränkt und anschließend 10 min bei 120°C getrocknet.

Abschließend wurden die Elektrodenkörper mit einer Graphit und Silberschicht überzogen.

Die mittleren elektrischen Werte der auf die vorangehende Weise gefertigten 15 Kondensatoren befinden sich in Tabelle 1. Die Kapazität (in Mikrofarad) und der Verlustfaktor (in Prozent) wurde bei 120 Hz und der äquivalente Serienwiderstand (ESR) (in Milliohm) bei 100 kHz mittels eines LCR Meters (Agilent 4284A) bestimmt. Der Reststrom (in Mikroampere) wurde drei Minuten nach Anlegen einer 25 V Spannung mit einem Keithley 199 Multimeter bestimmt.

**Beispiel 3:** Herstellung von Kondensatoren nach dem erfindungsgemäßen Verfahren

15 Kondensatoren wurden wie in Beispiel 2 gefertigt, als Material zur Herstellung der polymeren Zwischenschicht wurde jedoch folgende Dispersion verwendet:

100 g der Dispersion B (aus Beispiel 1), 1 g einer wässrigen Phenolharzdispersion (Phenodur VPW 1942, Feststoffgehalt 52%, Cytec Industries), 4g Dimethylsufoxid (DMSO), 0,5 g Dimethylethanolamin (50%ige Lösung in Wasser) und 0,2 g Netzmittel (Dynol 604, Air Products) wurden in einem Becherglas mit Rührer intensiv zu einer Dispersion gemischt. Die Dispersion wies einen pH-Wert von 6.5 auf.

Die mittleren elektrischen Werte der auf die vorangehende Weise gefertigten 15 Kondensatoren befinden sich in Tabelle 1.

**Beispiel 4:** Herstellung von Kondensatoren nach dem erfindungsgemäßen Verfahren

15 Kondensatoren wurden wie in Beispiel 2 gefertigt, als Material zur Herstellung der polymeren Zwischenschicht wurde jedoch folgende Dispersion verwendet:

100 g der Dispersion B (aus Beispiel 1), 2,1 g eines Epoxy-Novolak-Harzes (EPI-REZ 6006 W-70, Feststoffgehalt 70%, Resolution), 0,5 g Dimethylethanolamin (50%ige Lösung in Wasser), 5 g Ethylenglykol, 0,5 g 3-Glycidoxypropyltrimethoxysilan (Silquest A-187, OSi Specialties) und 0,2 g Netzmittel (Surfynol E-104, Air Products) wurden in einem Becherglas mit Rührer intensiv zu einer Dispersion gemischt.

Die mittleren elektrischen Werte der auf die vorangehende Weise gefertigten 15 Kondensatoren befinden sich in Tabelle 1.

**Vergleichsbeispiel 1:** Herstellung von Kondensatoren ohne polymere Zwischenschicht

15 Kondensatoren wurden wie in Beispiel 2 gefertigt, jedoch ohne Aufbringung einer polymeren Zwischenschicht wie in 2.3. in Beispiel 2.

Die mittleren elektrischen Werte der auf die vorangehende Weise gefertigten 15 Kondensatoren befinden sich in Tabelle 1.

Tabelle 1

| | Kapazität [μF] | Verlustfaktor [%] | ESR [mΩ] | Reststrom [μA] |
|---|---|---|---|---|
| Beispiel 2 | 0,9 | 5 | 260 | 0,003 |
| Beispiel 3 | 0,9 | 4 | 270 | 0,002 |
| Beispiel 4 | 0,9 | 4 | 280 | 0.005 |
| Vergleichsbeispiel 1 | 0,9 | 5 | 440 | 0,005 |

Die Kondensatoren aus den Beispielen 2 bis 4 weisen einen deutlich niedrigeren ESR als die Kondensatoren des Vergleichsbeispiels auf. Die erfindungsgemäß hergestellte polymere Zwischenschicht senkt den ESR in Feststoffelektrolytkondensatoren signifikant ab.

**Beispiel 5:** Herstellung von Kondensatoren nach dem erfindungsgemäßen Verfahren

5.1. Herstellung von oxidierten Elektrodenkörpern:

Tantalpulver mit einer spezifischen Kapazität von 50 000 μFV/g wurde unter Einschluss eines Tantaldrahtes zu Pellets gepresst und gesintert, um einen Elektrodenkörper mit den Abmessungen 0.8 mm * 0.8 mm* 1 mm zu bilden. Neun dieser porösen Elektrodenkörper wurden zur Bildung eines Dielektrikums in einem Phosphorsäureelektrolyten auf 30 V anodisiert.

5.2 Herstellung des Feststoffelektrolyten

100 g der Dispersion B aus Beispiel 1 und 4g Dimethylsufoxid (DMSO) wurden in einem Becherglas mit Rührer intensiv gemischt und mit Wasser auf einen Feststoffgehalt von 0.6% zu einer Dispersion B5 verdünnt.

Die oxidierten Elektrodenkörper wurden in dieser Dispersion B5 1 min getränkt. Danach erfolgte eine Trocknung bei 120°C für 10 min. Tränkung und Trocknung wurden 14 weitere Male durchgeführt.

5.3 Herstellung der erfindungsgemäßen polymeren Zwischenschicht

Die oxidierten Elektrodenkörper wurden in der Dispersion B2 (Beispiel 2.3) 1 min getränkt. Danach erfolgte eine Trocknung bei 120°C für 10 min. Tränkung und Trocknung wurden vier weitere Male durchgeführt.

5.4 Herstellung einer polymeren Außenschicht

Die Kondensatorkörper wurden in der Dispersion C aus Beispiel 1 getränkt und anschließend 10 min bei 120°C getrocknet.

Abschließend wurden die Elektrodenkörper mit einer Graphit und Silberschicht überzogen.

Die mittleren elektrischen Werte der auf die vorangehende Weise gefertigten neun Kondensatoren befinden sich in Tabelle 2. Die Kapazität (in Mikrofarad) wurde bei 120 Hz und der äquivalente Serienwiderstand (ESR) (in Milliohm) bei 100 kHz mittels eines LCR Meters (Agilent 4284A) bestimmt.

Nach Messung der elektrischen Werte wurden die Kondensatoren in einen auf 300°C geheizten Ofen gestellt, nach 30 Sekunden (s) wieder entnommen und auf Raumtemperatur abgekühlt. Dieser Vorgang wurde drei weitere Male wiederholt und anschließend der ESR der Kondensatoren erneut gemessen. Die Werte befinden sich ebenfalls in Tabelle 2.

**Vergleichsbeispiel 2:** Herstellung von Kondensatoren ohne polymere Zwischenschicht

Neun Kondensatoren wurden wie in Beispiel 5 gefertigt, jedoch ohne Aufbringung einer polymeren Zwischenschicht wie unter 5.3. in Beispiel 5.

Die mittleren elektrischen Werte der auf die vorangehende Weise gefertigten neun Kondensatoren befinden sich in Tabelle 2.

**Vergleichsbeispiel 3:** Herstellung von Kondensatoren mit nicht erfindungsgemäßer Zwischenschicht

Neun Kondensatoren wurden wie in Beispiel 5 gefertigt, jedoch wurde als Material zur Herstellung der polymeren Zwischenschicht die Dispersion B5 aus 5.2. in Beispiel 5 verwendet, welche keinen Binder enthält.

Die mittleren elektrischen Werte der auf die vorangehende Weise gefertigten neun Kondensatoren befinden sich in Tabelle 2

**Beispiel 6:** Herstellung von Kondensatoren nach dem erfindungsgemäßen Verfahren

6.1. Herstellung von oxidierten Elektrodenkörpern:

Neun oxidierte Elektrodenkörper wurden wie unter 5.1 aus Beispiel 5 hergestellt.

6.2 Herstellung des Feststoffelektrolyten

Es wurde eine Lösung, bestehend aus einem Gewichtsteil 3,4-Ethylendioxythiophen (BAYTRON® M, H.C. Starck GmbH) und 20 Gewichtsteilen einer 40 Gew.-%igen ethanolischen Lösung von Eisen(III)-p-toluolsulfonat (BAYTRON® C-E, H.C. Starck GmbH) hergestellt.

Die Lösung wurde zur Imprägnierung der oxidierten Elektrodenkörper verwendet. Die Elektrodenkörper wurden in dieser Lösung getränkt und anschließend für 30 min bei Raumtemperatur (20°C) getrocknet. Danach wurden sie 30 min bei 50°C in einem Trockenschrank wärmebehandelt. Anschließend wurden die Elektrodenkörper in einer 2 Gew.-% igen wässrigen Lösung von p-Toluolsäure 60 min lang gewaschen. Die Elektrodenkörper wurden 30 min in einer 0,25 Gew.-% wässrigen Lösung von p-Toluolsulfonsäure deformiert, anschließend in destilliertem Wasser gespült und getrocknet. Die beschriebene Tränkung, Trocknung, Temperaturbehandlung und Reformierung wurde mit denselben Elektrodezikörpern noch zwei weitere Male durchgeführt.

6.3 Herstellung der erfindungsgemäßen polymeren Zwischenschicht

Eine polymere Zwischenschicht wurde wie unter 5.3 aus Beispiel 5 aufgebracht.

6.4 Herstellung einer polymeren Außenschicht

Eine polymere Außenschicht wurde wie unter 5.4 aus Beispiel 5 aufgebracht. Abschließend wurden die Elektrodenkörper mit einer Graphit und Silberschicht überzogen.

Die mittleren elektrischen Werte der auf die vorangehende Weise gefertigten neun Kondensatoren befinden sich in Tabelle 2.

**Vergleichsbeispiel 4:** Herstellung von Kondensatoren ohne polymere Zwischenschicht

Neun Kondensatoren wurden wie in Beispiel 6 gefertigt, jedoch ohne polymere Zwischenschicht aus 6.3.

Die mittleren elektrischen Werte der auf die vorangehende Weise gefertigten neun Kondensatoren befinden sich in Tabelle 2

Tabelle 2

| | Kapazität [µF] | ESR [mΩ vor Temperaturbehandlung | ESR [mΩ] nach Temperaturbehandlung |
|---|---|---|---|
| Beispiel 5 | 5 | 250 | 260 |
| Beispiel 6 | 5 | 260 | 270 |
| Vergleichsbeispiel 2 | 5 | 670 | 800 |
| Vergleichsbeispiel 3 | 5 | 620 | 780 |
| Vergleichsbeispiel 4 | 5 | 390 | 490 |

Die Kondensatoren aus den Beispielen 5 bis 6 weisen einen deutlich niedrigeren ESR als die Kondensatoren der Vergleichsbeispiele 2 bis 3 auf. Die erfindungsgemäß hergestellte polymere Zwischenschicht senkt den ESR in Feststoffelektrolytkondensatoren signifikant ab. Darüber hinaus steigt der ESR der Kondensatoren aus den Beispielen 5 bis 6 bei thermischer Belastung kaum an, während in den Vergleichsbeispielen ein starker Anstieg zu verzeichnen ist.

**Beispiel 7:** Herstellung von Kondensatoren nach dem erfindungsgemäßen Verfahren

7.1. Herstellung von oxidierten Elektrodenkörpern:

Tantalpulver mit einer spezifischen Kapazität von 100 000 μFV/g wurde unter Einschluss eines Tantaldrahtes zu Pellets gepresst und gesintert, um einen Elektrodenkörper mit den Abmessungen 1.1 mm * 1.1 mm* 2.2 mm zu bilden. Neun dieser porösen Elektrodenkörper wurden zur Bildung eines Dielektrikums in einem Phosphorsäureelektrolyten auf 30 V anodisiert.

7.2 Herstellung des Feststoffelektrolyten

Die oxidierten Elektrodenkörper wurden in der Dispersion B5 aus Beispiel 5 1 min getränkt. Danach erfolgte eine Trocknung bei 120°C für 10 min. Tränkung und Trocknung wurden 14 weitere Male durchgeführt.

7.3 Herstellung der erfindungsgemäßen polymeren Zwischenschicht

Die oxidierten Elektrodenkörper wurden in der Dispersion B2 (Beispiel 2.3) 1 min getränkt. Danach erfolgte eine Trocknung bei 120°C für 10 min. Tränkung und Trocknung wurden vier weitere Male durchgeführt.

7.4 Herstellung einer polymeren Außenschicht

Die Kondensatorkörper wurden in der Dispersion C aus Beispiel 1 getränkt und anschließend 10 min bei 120°C getrocknet. Abschließend wurden die Elektrodenkörper mit einer Graphit und Silberschicht überzogen.

Die mittleren elektrischen Werte der auf die vorangehende Weise gefertigten neun Kondensatoren befinden sich in Tabelle 3. Die Kapazität (in Mikrofarad) wurde bei 120 Hz und der äquivalente Serienwiderstand (ESR) (in Milliohm) bei 100 kHz mittels eines LCR Meters (Agilent 4284A) bestimmt.

**Vergleichsbeispiel 5:** Herstellung von Kondensatoren ohne polymere Zwischenschicht

Neun Kondensatoren wurden wie in Beispiel 7 gefertigt, jedoch ohne Aufbringung einer polymeren Zwischenschicht wie unter 7.3. in Beispiel 7.

Die mittleren elektrischen Werte der auf die vorangehende Weise gefertigten neun Kondensatoren befinden sich in Tabelle 3.

Tabelle 3

| | Kapazität [μF] | ESR [mΩ] |
|---|---|---|
| Beispiel 7 | 45 | 120 |
| Vergleichsbeispiel 5 | 45 | 160 |

Die Kondensatoren aus dem Beispiel 7 weisen einen deutlich niedrigeren ESR als die Kondensatoren des Vergleichsbeispiels 5 auf. Die erfindungsgemäß hergestellte polymere Zwischenschicht senkt den ESR in Feststoffelektrolytkondensatoren signifikant ab. Die Absenkung des ESR ist im Vergleich zu den etwas kleineren Kondensatoren aus den Beispielen 2 bis 6 weniger stark ausgeprägt.

**Beispiel 8:** Herstellung von Kondensatoren nach dem erfindungsgemäßen Verfahren

8.1. Herstellung von oxidierten Elektrodenkörpern:

Tantalpulver mit einer spezifischen Kapazität von 100 000 μFV/g wurde unter Einschluss eines Tantaldrahtes zu Pellets gepresst und gesintert, um einen Elektrodenkörper mit den Abmessungen 0.8 mm * 0.8 mm* 1 mm zu bilden. Neun dieser porösen Elektrodenkörper wurden zur Bildung eines Dielektrikums in einem Phosphorsäureelektrolyten auf

30 V anodisiert.

8.2 Herstellung des Feststoffelektrolyten

100 g der Dispersion B aus Beispiel 1 und 4g Dimethylsufoxid (DMSO) wurden in einem Becherglas mit Rührer intensiv gemischt und mit Wasser auf einen Feststoffgehalt von 0.6% zu einer Dispersion B5 verdünnt. Die spezifische Leitfähigkeit dieser Dispersion betrug 430 S/cm.

Die oxidierten Elektrodenkörper wurden in dieser Dispersion B5 1 min getränkt. Danach erfolgte eine Trocknung bei 120°C für 10 min. Tränkung und Trocknung wurden 14 weitere Male durchgeführt.

8.3 Herstellung der erfindungsgemäßen polymeren Zwischenschicht

100 g der Dispersion B (aus Beispiel 1), 3 g eines Sulfopolyesters (Eastek 1100, Feststoffgehalt 30% in Wasser) und 4g Dimethylsufoxid (DMSO) wurden in einem Becherglas mit Rührer intensiv zu einer Dispersion B2 gemischt.

Die oxidierten Elektrodenkörper wurden in dieser Dispersion B2 1 min getränkt. Danach erfolgte eine Trocknung bei 120°C für 10 min. Tränkung und Trocknung wurden vier weitere Male durchgeführt.

8.4 Herstellung einer polymeren Außenschicht

Die Kondensatorkörper wurden in der Dispersion C aus Beispiel 1 getränkt und anschließend 10 min bei 120°C getrocknet.

Abschließend wurden die Elektrödenkörper mit einer Graphit und Silberschicht überzogen.

Die mittleren elektrischen Werte der auf die vorangehende Weise gefertigten neun Kondensatoren befinden sich in Tabelle 4.Die Kapazität (in Mikrofarad) wurde bei 120 Hz und der äquivalente Serienwiderstand (ESR) (in Milliohm) bei 100 kHz mittels eines LCR Meters (Agilent 4284A) bestimmt.

**Vergleichsbeispiel 6:** Herstellung von Kondensatoren ohne polymere Zwischenschicht

Neun Kondensatoren wurden wie in Beispiel 8 gefertigt, jedoch ohne Aufbringung einer polymeren Zwischenschicht wie unter 8.3. in Beispiel 8.

Die mittleren elektrischen Werte der auf die vorangehende Weise gefertigten neun Kondensatoren befinden sich in Tabelle 4.

**Vergleichsbeispiel 7:** Herstellung von Kondensatoren nach nicht erfindungsgemäßem Verfahren mittels einer Dispersion enthaltend keinen Binder

Neun Kondensatoren wurden wie in Beispiel 8 gefertigt, jedoch wurde als Material zur Herstellung der polymeren Zwischenschicht die Dispersion B5 aus 8.2. in Beispiel 8 verwendet, welche keinen Binder enthält.

Die mittleren elektrischen Werte der auf die vorangehende Weise gefertigten neun Kondensatoren befinden sich in Tabelle 4.

**Vergleichsbeispiel 8:** Herstellung von Kondensatoren nach nicht erfindungsgemäßem Verfahren mittels einer Dispersion enthaltend Teilchen eines mittleren Durchmessers größer 60 nm und einen Binder

Neun Kondensatoren wurden wie in Beispiel 8 gefertigt, jedoch wurde zur Herstellung der polymeren Zwischenschicht folgende Dispersion verwendet:

100 g der Dispersion A (aus Beispiel 1), 3 g eines Sulfopolyesters (Eastek 1100, Feststoffgehalt 30% in Wasser) und 4g Dimethylsufoxid (DMSO) und wurden in einem Becherglas mit Rührer intensiv zu einer Dispersion gemischt. Die spezifische Leitfähigkeit dieser Dispersion betrug 200 S/cm.

Die mittleren elektrischen Werte der auf die vorangehende Weise gefertigten neun Kondensatoren befinden sich in Tabelle 4.

**Vergleichsbeispiel 9:** Herstellung von Kondensatoren nach nicht erfindungsgemäßem Verfahren mittels einer Dispersion enthaltend Teilchen eines mittleren Durchmessers größer 60 nm und keinen Binder

Neun Kondensatoren wurden wie in Beispiel 8 gefertigt, jedoch wurde zur Herstellung der polymeren Zwischenschicht folgende Dispersion verwendet:

100 g der Dispersion A (aus Beispiel 1) und 4g Dimethylsufoxid (DMSO) und wurden in einem Becherglas mit

Rührer intensiv zu einer Dispersion gemischt. Die spezifische Leitfähigkeit dieser Dispersion betrug 430 S/cm.

Die mittleren elektrischen Werte der auf die vorangehende Weise gefertigten neun Kondensatoren befinden sich in Tabelle 4.

Tabelle 4

| | Kapazität [µF] | ESR [mΩ] |
|---|---|---|
| Beispiel 8 | 12 | 130 |
| Vergleichsbeispiel 6 | 12 | 240 |
| Vergleichsbeispiel 7 | 12 | 220 |
| Vergleichsbeispiel 8 | 12 | 280 |
| Vergleichsbeispiel 9 | 12 | 220 |

Die Kondensatoren aus dem Beispiel 8 weisen einen deutlich niedrigeren ESR als die Kondensatoren der Vergleichsbeispiele 6 bis 9 auf. Die erfindungsgemäß hergestellte polymere Zwischenschicht senkt den ESR in Feststoffelektrolytkondensatoren signifikant ab. Polymere Zwischenschichten hergestellt ohne Binder führen sowohl mit Teilchen einer mittleren Größe von 1-60 nm (Vergleichsbeispiel 7) als auch mit größeren Teilchen (Vergleichsbeispiel 9) zu einem höheren ESR, obwohl die Leitfähigkeit dieser Zwischenschicht deutlich besser ist. Auch polymere Zwischenschichten hergestellt mit Bindernjedoch aus Teilchen mit einem mittleren Durchmesser von größer 60 nm führen zu einem höheren ESR (Vergleichsbeispiel 8).

**Beispiel 9:** Herstellung von Kondensatoren nach dem erfindungsgemäßen Verfahren

9.1. Herstellung von oxidierten Elektrodenkörpern:

10 poröse Aluminiumfolien der Größe 4 mm * 4mm wurden bei 20 V anodisiert.

9.2 Herstellung des Feststoffelektrolyten

100g der Dispersion B (aus Beispiel 1), 4 g Dimethylsulfoxid (DMSO) und 0,5 g 3-Glycidoxypropyltrimethoxysilan (Silquest A-187, OSi Specialties) wurden in einem Becherglas mit Rührer intensiv zu einer Dispersion gemischt. Anschließend wurde der pH-Wert dieser Dispersion durch Zugabe von 2-Dimethylaminoethanol auf eine Wert von 6 eingestellt.

Die oxidierten Aluminiumfolien wurden in dieser Dispersion 1 min getränkt. Danach erfolgte eine Trocknung bei 120°C für 10 min. Tränkung und Trocknung wurden neun weitere Male durchgeführt.

9.3 Herstellung der erfindungsgemäßen polymeren Zwischenschicht

100g der Dispersion B (aus Beispiel 1), 4 g Dimethylsulfoxid (DMSO), 0,5 g 3-Glycidoxypropyltrimethoxysilan (Silquest A-187, OSi Specialties) und 3 g eines Sulfopolyesters (Eastek 1100, Feststoffgehalt 30% in Wasser) wurden in einem Becherglas mit Rührer intensiv zu einer Dispersion gemischt. Anschließend wurde der pH-Wert dieser Dispersion durch Zugabe von 2-Dimethylaminoethanol auf eine Wert von 6 eingestellt.

Die oxidierten Aluminiumkörper wurden in dieser Dispersion 1 min getränkt. Danach erfolgte eine Trocknung bei 120°C für 10 min. Tränkung und Trocknung wurden ein weiteres Mal durchgeführt.

9.4 Herstellung einer polymeren Außenschicht

Die Kondensatorkörper wurden in der Dispersion C aus Beispiel 1 getränkt und anschließend 10 min bei 120°C getrocknet.

Abschließend wurden die Elektrodenkörper mit einer Graphit und Silberschicht überzogen.

Die mittleren elektrischen Werte der auf die vorangehende Weise gefertigten 10 Kondensatoren befinden sich in Tabelle 5.Die Kapazität (in Mikrofarad) wurde bei 120 Hz und der äquivalente Serienwiderstand (ESR) (in Milliohm) bei 100 kHz mittels eines LCR Meters (Agilent 4284A) bestimmt.

**Vergleichsbeispiel 10:** Herstellung von Kondensatoren ohne polymere Zwischenschicht

10 Kondensatoren wurden wie in Beispiel 9 gefertigt, jedoch ohne Aufbringung einer polymeren Zwischenschicht wie unter 9.3. in Beispiel 9.

Die mittleren elektrischen Werte der auf die vorangehende Weise gefertigten neun Kondensatoren befinden sich in Tabelle 5.

Tabelle 5

| | Kapazität [µF] | ESR [mΩ] |
|---|---|---|
| Beispiel 9 | 14 | 17 |
| Vergleichsbeispiel 10 | 14 | 25 |

Die Kondensatoren aus dem Beispiel 9 weisen einen deutlich niedrigeren ESR als die Kondensatoren des Vergleichsbeispiels 10 auf. Die erfindungsgemäß hergestellte polymere Zwischenschicht senkt den ESR in Feststoffelektrolytkondensatoren signifikant ab.

## Patentansprüche

1. Verfahren zur Herstellung eines Elektrolytkondensators, bei dem auf einen Kondensatorkörper (1), wenigstens umfassend
einen porösen Elektrodenkörper (2) eines Elektrodenmaterials und ein Dielektrikum (3), das die Oberfläche dieses Elektrodenmaterials bedeckt,
einen Feststoffelektrolyten (4) wenigstens enthaltend ein elektrisch leitfähiges Material, der die Dielektrikumsoberfläche ganz oder teilweise bedeckt,
wenigstens eine Dispersion a1) aufgebracht wird, die wenigstens Teilchen b1) eines elektrisch leitfähigen Polymers und ein Dispersionsmittel d1) enthält, und zur Bildung einer elektrisch leitfähigen polymeren Zwischenschicht das Dispersionsmittel d1) wenigstens teilweise entfernt wird,
und wenigstens eine Dispersion a2) aufgebracht wird, die wenigstens Teilchen b2) eines elektrisch leitfähigen Polymers mit einem mittleren Durchmesser von 70-1000 nm, ein Dispersionsmittel d2) und einen Binder c2) enthält, und zur Bildung einer elektrisch leitfähigen polymeren Außenschicht das Dispersionsmittel d2) wenigstens teilweise entfernt und/oder der Binder c2) ausgehärtet wird,
**dadurch gekennzeichnet, dass** die Dispersion a1) einen Binder c1) enthält und die Teilchen b1) des leitfähigen Polymers in der Dispersion a1) einen mittleren Durchmesser von 1- 60 nm haben.

2. Verfahren gemäß Anspruch 1, **dadurch gekennzeichnet, dass** Filme hergestellt aus Teilchen b1) und/oder Filme hergestellt aus Teilchen b2) im trockenen Zustand eine spezifische elektrische Leitfähigkeit von größer 10 S/cm aufweisen.

3. Verfahren gemäß einem der Ansprüche 1 oder 2, **dadurch gekennzeichnet, dass** die Dispersion a1) und/oder Dispersion a2) einen Gehalt an Metallen kleiner 5000 mg/kg besitzt.

4. Verfahren gemäß wenigstens einem der Ansprüche 1 bis 3, **dadurch gekennzeichnet, dass** der in der Dispersion a1 enthaltene Binder c1) und/oder der in Dispersion a2) enthaltene Binder c2) ein polymerer organischer Binder ist, wobei die Binder in Dispersion a1) und Dispersion a2) unterschiedlich sein können.

5. Verfahren gemäß wenigstens einem der Ansprüche 1 bis 4, **dadurch gekennzeichnet, dass** die Dispersion a1) und/oder Dispersion a2) als Dispersionsmittel organische Lösungsmittel, Wasser oder Mischungen aus diesen enthält, wobei die Dispersionsmittel in Dispersion a1 und Dispersion a2) unterschiedlich sein können.

6. Verfahren gemäß wenigstens einem der Ansprüche 1 bis 5, **dadurch gekennzeichnet, dass** die Teilchen b1) in der Dispersion a1) und/oder die Teilchen b2) in der Dispersion a2) als leitfähiges Polymer wenigstens ein Polythiophen, Polyanilin oder Polypyrrol enthalten, welche gegebenenfalls substituiert sind, wobei die leitfähigen Polymere der Teilchen b1) und b2) unterschiedlich sein können.

7. Verfahren gemäß wenigstens einem der Ansprüche 1 bis 6, **dadurch gekennzeichnet, dass** die Teilchen b1) in

der Dispersion a1) und/oder die Teilchen b2) in der Dispersion a2) wenigstens ein Polythiophen mit wiederkehrenden Einheiten der allgemeinen Formel (I) oder der allgemeinen Formel (II) oder der allgemeinen Formel (X) oder wiederkehrenden Einheiten der Formeln (I) und (II), oder wiederkehrenden Einheiten der Formeln (I) und (X) oder wiederkehrenden Einheiten der Formeln (II) und (X) oder wiederkehrenden Einheiten der Formeln (I), (II) und (X) enthalten,

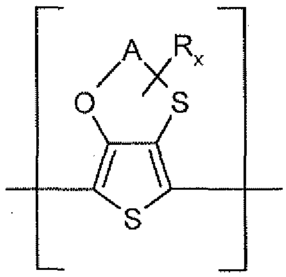

(I),

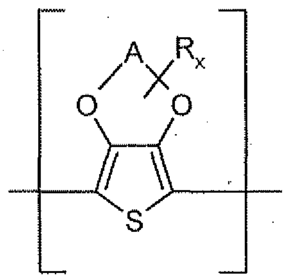

(II)

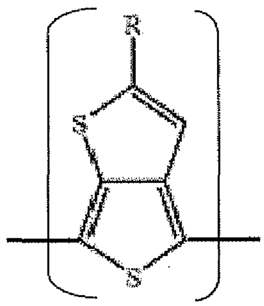

(X)

worin

A für einen gegebenenfalls substituierten $C_1$-$C_5$-Alkylenrest steht,
R unabhängig voneinander für H, einen linearen oder verzweigten, gegebenenfalls substituierten $C_1$-$C_{18}$-Alkylrest, einen gegebenenfalls substituierten $C_5$-$C_{12}$-Cycloalkylrest, einen gegebenenfalls substituierten $C_6$-$C_{14}$-Arylrest, einen gegebe-nenfalls substituierten $C_7$-$C_8$-Aralkylrest, einen gegebenenfalls substituierten $C_1$-$C_4$-Hydroxyalkylrest oder einen Hydroxylrest steht,
x für eine ganze Zahl von 0 bis 8 steht und

für den Fall, dass mehrere Reste R an A gebunden sind, diese gleich oder unterschiedlich sein können, wobei die leitfähigen Polymere der Teilchen b1) und b2) unterschiedlich sein können.

**8.** Verfahren gemäß wenigstens einem der Ansprüche 1 bis 7, **dadurch gekennzeichnet, dass** das Polythiophen in der Dispersion a1) und/oder der Dispersion a2) ein gegebenenfalls substituiertes Poly (3,4-ethylendioxythiophen) ist.

**9.** Verfahren gemäß wenigstens einem der Ansprüche 1 bis 8, **dadurch gekennzeichnet, dass** die Dispersion a1) und/oder der Dispersion a2) zusätzlich wenigstens ein polymeres Anion enthält, wobei die polymeren Anionen in Dispersion a1) und Dispersion a2) unterschiedlich sein können.

**10.** Verfahren gemäß Anspruch 9, **dadurch gekennzeichnet, dass** das polymere Anion in Dispersion a1) und/oder Dispersion a2) ein Anion einer polymeren Carbon- oder Sulfonsäure ist, wobei die polymeren Anionen in Dispersion a1) und Dispersion a2) unterschiedlich sein können.

**11.** Verfahren gemäß wenigstens einem der Ansprüche 1 bis 10, **dadurch gekennzeichnet, dass** die Dispersion a1) und/oder Dispersion a2) zusätzlich Vernetzer und/oder oberflächenaktive Substanzen und/oder weitere Additive enthält, wobei die Vernetzer und/oder oberflächenaktive Substanzen und/oder weitere Additive in Dispersion a1) und Dispersion a2) unterschiedlich sein können.

**12.** Verfahren gemäß wenigstens einem der Ansprüche 1 bis 11, **dadurch gekennzeichnet, dass** das Aufbringen der Dispersion a1) und/oder Dispersion a2) mehrfach erfolgt.

**13.** Verfahren gemäß wenigstens einem der Ansprüche 1 bis 12, **dadurch gekennzeichnet, dass** das leitfähige Material des Feststoffelektrolyten (4) ein leitfähiges Polymer ist.

**14.** Verfahren gemäß Anspruch 13, **dadurch gekennzeichnet, dass** das im Feststoffelektrolyten enthaltene leitfähige Polymer Poly(3,4-ethylendioxythiophen)/Polystyrolsulfonsäure ist.

**15.** Verfahren gemäß wenigstens einem der Ansprüche 1 bis 14, **dadurch gekennzeichnet, dass** es sich bei dem Elektrodenmaterial des Elektrodenkörpers (2) um ein Ventilmetall oder eine Verbindung mit einem Ventilmetall vergleichbaren elektrischen Eigenschaften handelt.

**16.** Elektrolytkondensator hergestellt mit einem Verfahren gemäß wenigstens einem der Ansprüche 1 bis 15.

**17.** Verwendung von Elektrolytkondensatoren gemäß Anspruch 16 in elektronischen Schaltungen.

## Claims

**1.** Process for producing an electrolyte capacitor, in which a capacitor body (1) at least comprising
a porous electrode body (2) of an electrode material and a dielectric (3) which covers the surface of this electrode material,
a solid electrolyte (4) at least containing an electrically conductive material which partly or fully covers the dielectric surface,
is subjected to application of at least one dispersion a1) which comprises at least particles b1) of an electrically conductive polymer and a dispersant d1), and an electrically conductive polymeric intermediate layer is formed by at least partly removing the dispersant d1),
and of at least one dispersion a2) which comprises at least particles b2) of an electrically conductive polymer having a mean diameter of 70-1000 nm, a dispersant d2) and a binder c2), and an electrically conductive polymeric outer layer is formed by at least partly removing the dispersant d2) and/or curing the binder c2),
**characterized in that** the dispersion a1) comprises a binder c1) and the particles b1) of the conductive polymer in dispersion a1) have a mean diameter of 1- 60 nm.

**2.** Process according to Claim 1, **characterized in that** films produced from particles b1) and/or films produced from particles b2) in the dry state have a specific electrical conductivity of greater than 10 S/cm.

**3.** Process according to either of Claims 1 and 2, **characterized in that** the dispersion a1) and/or dispersion a2) has a content of metals of less than 5000 mg/kg.

**4.** Process according to at least one of Claims 1 to 3, **characterized in that** the binder c1) present in dispersion a1) and/or the binder c2) present in dispersion a2) is a polymeric organic binder, and the binders in dispersion a1) and dispersion a2) may be different.

**5.** Process according to at least one of Claims 1 to 4, **characterized in that** the dispersion a1) and/or dispersion a2) comprises, as the dispersant, organic solvents, water or mixtures thereof, and the dispersants in dispersion a1) and dispersion a2) may be different.

**6.** Process according to at least one of Claims 1 to 5, **characterized in that** the particles b1) in dispersion a1) and/or the particles b2) in dispersion a2) comprise, as the conductive polymer, at least one polythiophene, polyaniline or polypyrrole which is optionally substituted, and the conductive polymers of particles b1) and b2) may be different.

**7.** Process according to at least one of Claims 1 to 6, **characterized in that** the particles b1) in dispersion a1) and/or the particles b2) in dispersion a2) at least one polythiophene with repeat units of the general formula (I) or of the general formula (II) or of the general formula (X) or repeat units of the formulae (I) and (II) or repeat units of the formulae (I) and (X) or repeat units of the formulae (II) and (X) or repeat units of the formulae (I), (II) and (X)

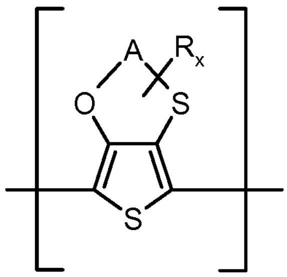

(I)

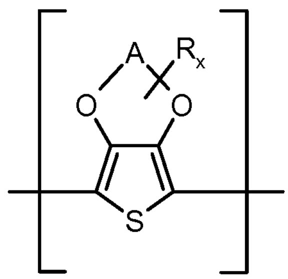

(II)

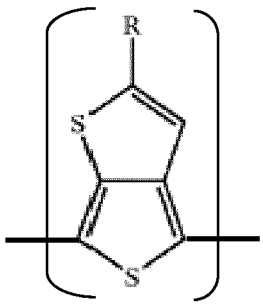

(X)

in which

A is an optionally substituted $C_1$-$C_5$-alkylene radical,
R is independently H, a linear or branched, optionally substituted $C_1$-$C_{18}$-alkyl radical, an optionally substituted $C_5$-$C_{12}$-cycloalkyl radical, an optionally substituted $C_6$-$C_{14}$-aryl radical, an optionally substituted $C_7$-$C_{18}$-aralkyl radical, an optionally substituted $C_1$-$C_4$-hydroxyalkyl radical or a hydroxyl radical,
x is an integer of 0 to 8 and,

in the case that a plurality of R radicals is bonded to A, they may be the same or different, and the conductive polymers of particles b1) and b2) may be different.

8. Process according to at least one of Claims 1 to 7, **characterized in that** the polythiophene in dispersion a1) and/or dispersion a2) is an optionally substituted poly(3,4-ethylenedioxythiophene).

9. Process according to at least one of Claims 1 to 8, **characterized in that** dispersion a1) and/or dispersion a2) additionally comprises at least one polymeric anion, and the polymeric anions in dispersion a1) and dispersion a2) may be different.

10. Process according to Claim 9, **characterized in that** the polymeric anion in dispersion a1) and/or dispersion a2) is an anion of a polymeric carboxylic or sulphonic acid, and the polymeric anions in dispersion a1) and dispersion a2) may be different.

11. Process according to at least one of Claims 1 to 10, **characterized in that** dispersion a1) and/or dispersion a2) additionally comprises crosslinkers and/or surface-active substances and/or further additives, and the crosslinkers and/or surface-active substances and/or further additives in dispersion a1) and dispersion a2) may be different.

12. Process according to at least one of Claims 1 to 11, **characterized in that** dispersion a1) and/or dispersion a2) is applied repeatedly.

13. Process according to at least one of Claims 1 to 12, **characterized in that** the conductive material of the solid electrolyte (4) is a conductive polymer.

14. Process according to Claim 13, **characterized in that** the conductive polymer present in the solid electrolyte is

poly(3,4-ethylenedioxythiophene)/ polystyrenesulphonic acid.

15. Process according to at least one of Claims 1 to 14, **characterized in that** the electrode material of the electrode body (2) is a valve metal or a compound with properties comparable to a valve metal.

16. Electrolyte capacitor produced by a process according to at least one of Claims 1 to 15.

17. Use of electrolyte capacitors according to Claim 16 in electronic circuits.

## Revendications

1. Procédé de fabrication d'un condensateur électrolytique, dans lequel on applique sur un corps de condensateur (1), comprenant au moins
un corps d'électrode poreux (2) d'un matériau d'électrode et un diélectrique (3), qui recouvre la surface de ce matériau d'électrode,
un électrolyte solide (4), contenant au moins un matériau conducteur de l'électricité, qui recouvre en totalité ou en partie la surface du diélectrique,
au moins une dispersion a1), qui contient au moins des particules b1) d'un polymère conducteur de l'électricité et un dispersant d1), et le dispersant d1) étant au moins partiellement éliminé pour former une couche intermédiaire polymère conductrice de l'électricité,
et au moins une dispersion a2), qui contient au moins des particules b2) d'un polymère conducteur de l'électricité, ayant un diamètre moyen de 70 à 1000 nm, un dispersant d2) et un liant c2), et le dispersant d2) étant au moins partiellement éliminé pour former une couche extérieure polymère conductrice de l'électricité, et/ou le liant c2) étant durci,
**caractérisé en ce que** la dispersion a1) contient un liant c1), et les particules b1) du polymère conducteur dans la dispersion a1) ont un diamètre moyen de 1 à 60 mm.

2. Procédé selon la revendication 1, **caractérisé en ce que** les films fabriqués à partir des particules b1) et/ou les films fabriqués à partir des particules b2) présentent à l'état sec une conductivité électrique spécifique supérieure à 10 S/cm.

3. Procédé selon l'une des revendications 1 ou 2, **caractérisé en ce que** la dispersion a1) et/ou la dispersion a2) ont une teneur en métaux inférieure à 5000 mg/kg.

4. Procédé selon au moins l'une des revendications 1 à 3, **caractérisé en ce que** le liant c1) contenu dans la dispersion a1) et/ou le liant c2) contenant dans la dispersion a2) sont des liants organiques polymères, les liants se trouvant dans la dispersion a1) et dans la dispersion a2) pouvant être différents.

5. Procédé selon au moins l'une des revendications 1 à 4, **caractérisé en ce que** la dispersion a1) et/ou la dispersion a2) contiennent en tant que dispersant des solvants organiques, de l'eau ou des mélanges de ceux-ci, les dispersants se trouvant dans la dispersion a1) et dans la dispersion a2) pouvant être différents.

6. Procédé selon au moins l'une des revendications 1 à 5, **caractérisé en ce que** les particules b1) de la dispersion a1) et/ou les particules b2) de la dispersion a2) contiennent en tant que polymères conducteurs au moins un polythiophène, une polyaniline ou un polypyrrole, qui sont éventuellement substitués, les polymères conducteurs des particules b1) et b2) pouvant être différents.

7. Procédé selon au moins l'une des revendications 1 à 6, **caractérisé en ce que** les particules b1) de la dispersion a1) et/ou les particules b2) de la dispersion a2) contiennent au moins un polythiophène ayant des motifs répétitifs de formule générale (I) ou de formule générale (II) ou de formule générale (X) ou des motifs répétitifs de formules (I) et (II), ou des motifs répétitifs de formules (I) et (X), ou des motifs répétitifs de formules (II) ou (X), ou des motifs répétitifs des formules (I), (II) et (X),

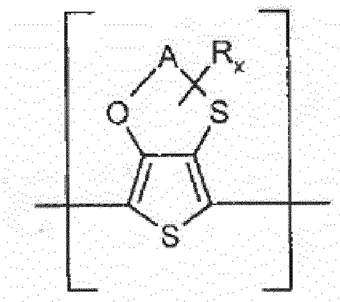

(I),

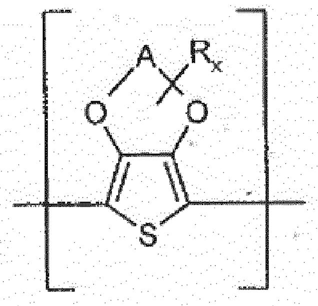

(II)

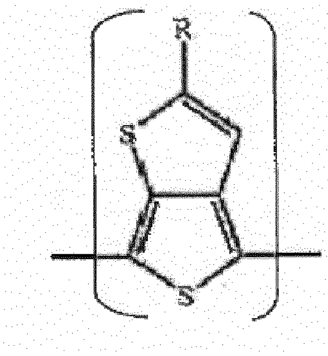

(X)

dans lesquelles
A représente un radical alkylène en $C_1$-$C_5$ éventuellement substitué,
les radicaux R représentent chacun indépendamment des autres H, un radical alkyle en $C_1$-$C_{18}$ à chaîne droite ou ramifiée, éventuellement substitué, un radical cycloalkyle en $C_5$-$C_{12}$ éventuellement substitué, un radical aryle en $C_6$-$C_{14}$ éventuellement substitué, un radical aralkyle en $C_7$-$C_{18}$ éventuellement substitué, un radical hydroxyalkyle en $C_1$-$C_4$ éventuellement substitué ou un radical hydroxyle,
x représente un nombre entier de 0 à 8, et
dans le cas dans lequel plusieurs radicaux R sont liés à A, ces derniers peuvent être identiques ou différents, les polymères conducteurs des particules b1) et b2) pouvant être différents.

**8.** Procédé selon au moins l'une des revendications 1 à 7, **caractérisé en ce que** le polythiophène de la dispersion a1) et/ou de la dispersion a2) est un poly(3,4-éthylènedioxythiophène) éventuellement substitué.

**9.** Procédé selon au moins l'une des revendications 1 à 8, **caractérisé en ce que** la dispersion a1) et/ou la dispersion a2) contiennent en outre au moins un anion polymère, les anions polymères de la dispersion a1) et de la dispersion a2) pouvant être différents.

**10.** Procédé selon la revendication 9, **caractérisé en ce que** l'anion polymère de la dispersion a1) et/ou de la dispersion a2) est un anion d'un acide carboxylique ou sulfonique polymère, les anions polymères de la dispersion a1) et de la dispersion a2) pouvant être différents.

**11.** Procédé selon au moins l'une des revendications 1 à 10, **caractérisé en ce que** la dispersion a1) et/ou la dispersion a2) contiennent en outre des agents de réticulation et/ou des substances tensioactives et/ou des additifs supplémentaires, les agents de réticulation et/ou les substances tensioactives et/ou les additifs supplémentaires de la dispersion a1) et de la dispersion a2) pouvant être différents.

**12.** Procédé selon au moins l'une des revendications 1 à 11, **caractérisé en ce que** l'application de la dispersion a1) et/ou de la dispersion a2) s'effectue plusieurs fois.

**13.** Procédé selon au moins l'une des revendications 1 à 12, **caractérisé en ce que** le matériau conducteur de l'électrolyte solide (4) est un polymère conducteur.

**14.** Procédé selon la revendication 13, **caractérisé en ce que** le polymère conducteur contenu dans l'électrolyte solide est le poly(3,4-éthylènedioxythiophène)/poly(acide styrènesulfonique).

**15.** Procédé selon au moins l'une des revendications 1 à 14, **caractérisé en ce que**, pour ce qui concerne le matériau d'électrode du corps d'électrode (2), il s'agit d'un métal pour soupape ou d'un composé ayant des propriétés électriques comparables à celles d'un métal pour soupape.

**16.** Condensateur électrolytique fabriqué par un procédé selon au moins l'une des revendications 1 à 15.

**17.** Utilisation de condensateurs électrolytiques selon la revendication 16 dans des circuits électroniques.

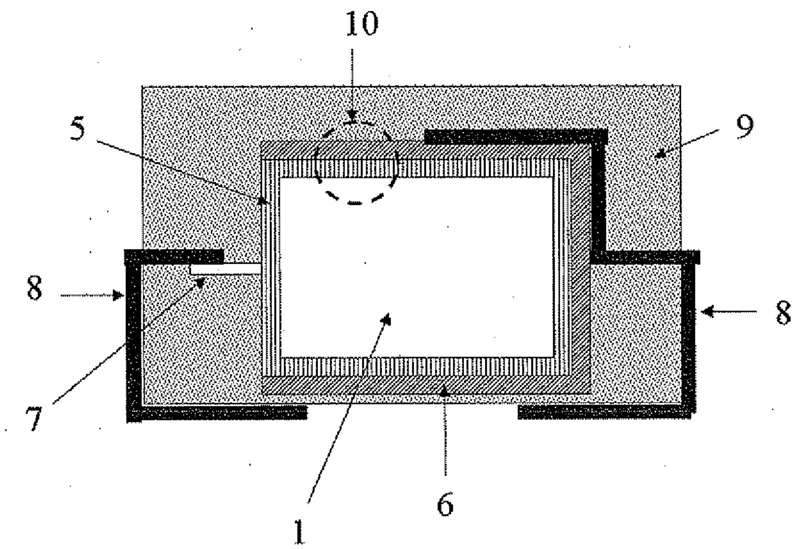


Fig. 1

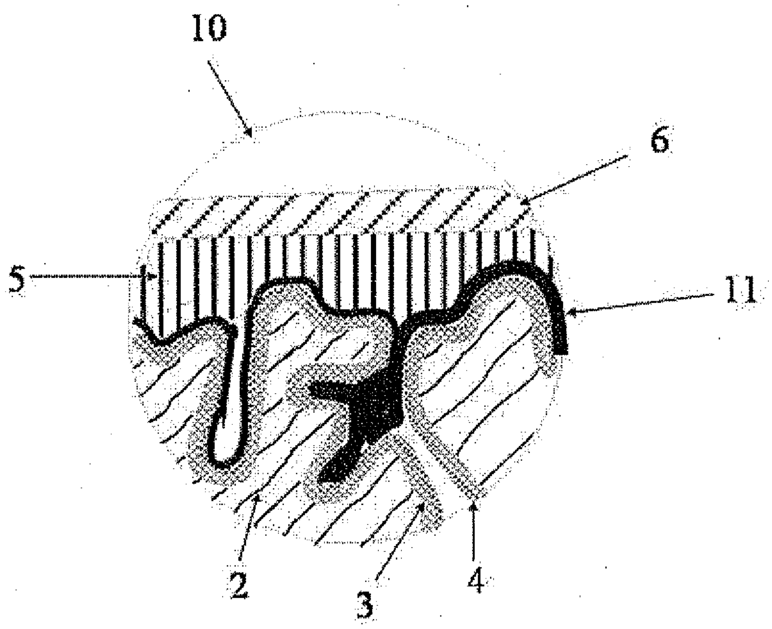


Fig. 2

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 340512 A
- JP 2003188052 A
- EP 1713103 A
- EP 1746613 A
- WO 2007031206 A
- US 20040074779 A1
- EP 440957 A
- DE 19627071 A


### In der Beschreibung aufgeführte Nicht-Patentliteratur


- *Colloid Polym. Sci.,* 1989, vol. 267, 1113-1116
- **HOUBEN WEYL.** Methoden der organischen Chemie. *Makromolekulare Stoffe,* 1987, vol. E 20 (2), 1141
- **L. GROENENDAAL ; F. JONAS ; D. FREITAG ; H. PIELARTZIK ; J. R. REYNOLDS.** *Adv. Mater.,* 2000, vol. 12, 481-494
- **P. BLANCHARD ; A. CAPPON ; E. LEVILLAIN ; Y. NICOLAS ; P. FRERE ; J. RONCALI.** *Org. Lett.,* 2002, vol. 4 (4), 607-609